(19) Europäisches Patentamt / European Patent Office / Office européen des brevets

(11) **EP 4 518 460 A1**

(12) **EUROPEAN PATENT APPLICATION**
published in accordance with Art. 153(4) EPC

(43) Date of publication:
**05.03.2025 Bulletin 2025/10**

(21) Application number: **23796752.6**

(22) Date of filing: **25.04.2023**

(51) International Patent Classification (IPC):
**H04W 56/00** (2009.01)    **H04W 74/00** (2009.01)
**H04W 72/23** (2023.01)    **H04W 72/04** (2023.01)

(52) Cooperative Patent Classification (CPC):
**H04W 56/00; H04W 72/04; H04W 72/23; H04W 74/00**

(86) International application number:
**PCT/KR2023/005591**

(87) International publication number:
**WO 2023/211107 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2022 KR 20220051651**

(71) Applicant: **LG Electronics Inc.**
**Yeongdeungpo-gu**
**Seoul 07336 (KR)**

(72) Inventors:
• **GO, Seongwon**
  **Seoul 06772 (KR)**
• **AHN, Joonkui**
  **Seoul 06772 (KR)**
• **KO, Hyunsoo**
  **Seoul 06772 (KR)**
• **YANG, Suckchel**
  **Seoul 06772 (KR)**
• **KANG, Jiwon**
  **Seoul 06772 (KR)**
• **KIM, Kyuseok**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD FOR UPLINK TRANSMISSION AND RECEPTION IN WIRELESS COMMUNICATION SYSTEM AND DEVICE FOR SAME**

(57)    A method performed by a terminal in a wireless communication system according to an embodiment disclosed herein comprises the steps of: receiving configuration information related to a plurality of control resource sets (CORESETs) from a base station; receiving downlink control information (DCI) from the base station; transmitting a random access preamble to the base station; and receiving a random access response (RAR) from the base station. The random access preamble is transmitted on the basis of an SSB index, and the SSB index is related to a first CORESET pool index or a second CORESET pool index.

【FIG. 3】

```
              Start
                │
   ┌────────────────────────────────┐
   │ Receive configuration information │──── S310
   └────────────────────────────────┘
                │
   ┌────────────────────────────────┐
   │           Receive DCI           │──── S320
   └────────────────────────────────┘
                │
   ┌────────────────────────────────┐
   │  Transmit random access preamble │──── S330
   └────────────────────────────────┘
                │
   ┌────────────────────────────────┐
   │  Receive random access response  │──── S340
   └────────────────────────────────┘
                │
               End
```

EP 4 518 460 A1

**Description**

[TECHNICAL FIELD]

The present disclosure relates to a method of transmitting and receiving an uplink in a wireless communication system and a device therefor.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies,, such as dual connectivity, massive multiple input multiple output (MIMO), in-band full duplex, non-orthogonal multiple access (NOMA), super wideband support, and device networking.

In the existing LTE and NR standards, in uplink timing advance configuration/indication, a single timing advance (TA) value is supported for a timing advance group (TAG) to which a specific cell or a group of cells belongs.

Multiple-DCI based Multiple-Transmission and Reception Point (M-DCI based M-TRP) operation may be performed in an environment where there is a large distance difference between a UE and different TRPs. In this case, a propagation delay difference, a slot boundary difference, and an inter-UE panel delay difference may occur between target TRPs of uplink transmission within CCBWP. In particular, this phenomenon may occur to a greater extent in a non-ideal backhaul operation in which coordination is not performed between TRPs.

As described above, in order to compensate for the timing difference or delay that occurs between the TRPs, uplink timing needs to be determined differently for each TRP. To this end, an operation of connecting/corresponding the TAG to a TCI state of unified TCI (e.g., joint TCI state, separate TCI state (DL TCI state or UL TCI state)) has been agreed.

[DISCLOSURE]

[TECHNICAL PROBLEM]

In order to utilize the above-described TRP specific TAs (e.g., two TAs corresponding to two TRPs) for M-TRP-based communication, the corresponding TAs must first be acquired through signaling between a terminal and a base station. On the other hand, if new configurations/operations are defined/specified/added to obtain the TRP specific TAs, it is not efficient in terms of terminal/base station implementation complexity.

The present disclosure proposes a method for obtaining TRP specific TAs by considering the terminal/base station implementation complexity.

In the existing operation related to TA, when the Time Alignment Timer expires, the terminal selects a random SSB (SSB index) and transmits a random access preamble based on the SSB index. Such an operation may not be efficient in obtaining/managing the TRP specific TA.

For example, it may be assumed that the Time Alignment Timer for a TA (e.g., a first TA) associated with TRP 1 (e.g., a first CORESET pool index) has expired. Since the terminal randomly selects one of a plurality of SSB indices, an SSB index associated with TRP 2 (or DL transmission beam of TRP 2) may be selected. In such cases, it may be difficult to obtain the TA for TRP 1 or an inaccurate TA may be obtained.

Furthermore, the present disclosure proposes a method for managing a TRP specific TA.

The technical objects of the present disclosure are not limited to the aforementioned technical objects, and other technical objects, which are not mentioned above, will be apparently appreciated by a person having ordinary skill in the art from the following description.

[TECHNICAL SOLUTION]

A method performed by a user equipment (UE) in a wireless communication system according to an embodiment of the present disclosure comprises receiving configuration information related to a plurality of control resource sets (CORESETs) from a base station, receiving downlink control information (DCI) from the base station, transmitting a random access preamble to the base station, and receiving a random access response (RAR) from the base station.

CORESETs based on a first control resource set (CORESET) pool index and a second control resource set (CORESET) pool index are configured based on the configuration information.

The DCI includes information related to a physical downlink control channel (PDCCH) order. A random access procedure is initiated by the PDCCH order.

The information related to the PDCCH order includes a synchronization signal/physical broadcast channel block index (SSB index).

The random access preamble is transmitted based on the SSB index. The random access response (RAR) includes a timing advance command.

The SSB index is related to the first CORESET pool index or the second CORESET pool index.

The method may further comprise receiving synchronization signals/physical broadcast channel blocks (SS/PBCH blocks, SSBs) from the base station based on a plurality of SSB indices.

The plurality of SSB indices may include i) first SSB indices associated with the first CORESET pool index and ii) second SSB indices associated with the second CORESET pool index.

The SSB index may be i) one of the first SSB indices or ii) one of the second SSB indices.

The RAR may be received based on monitoring PDCCH candidates in a search space set (SS set).

The SS set may be based on a common search space set (CSS set) or a UE-specific search space set (USS set).

The SSB set may be related to one or more CORESETs based on the first CORESET pool index or the second CORESET pool index.

The timing advance command may indicate an index related to timing adjustment, and $N_{TA}$ for calculating a timing advance (TA) may be indicated based on the index related to the timing adjustment.

The TA may be related to a first timing advance group (TAG) or a second timing advance group (TAG). The first TAG may be related to the first CORESET pool index, and the second TAG may be related to the second CORESET pool index.

A time alignment timer related to the TA may be a first time alignment timer related to the first TAG or a second time alignment timer related to the second TAG.

Based on the first time alignment timer and/or the second time alignment timer being related to a primary timing advance group (PTAG), and the first time alignment timer and the second time alignment timer being expired: a configuration for uplink transmission may be released.

Based on the timing alignment timer related to the TA being expired, a random access preamble may be transmitted based on an SSB index related to the expired time alignment timer, and the SSB index related to the expired time alignment timer may be related to the first CORESET pool index or the second CORESET pool index.

The SSB index may be based on one or more SSB indexes. Based on the one or more SSB indexes including i) a first SSB index associated with the first CORESET pool index and ii) a second SSB index associated with the second CORESET pool index: a first random access preamble may be transmitted based on the first SSB index, and a second random access preamble may be transmitted based on the second SSB index.

A user equipment (UE) operating in a wireless communication system according to another embodiment of the present disclosure comprises one or more transceivers, one or more processors, and one or more memories operably connectable to the one or more processors. The one or more memories are configured to store instructions that allow the one or more processors to perform operations based on being executed by the one or more processors.

The operations include receiving configuration information related to a plurality of control resource sets (CORESETs) from a base station, receiving downlink control information (DCI) from the base station, transmitting a random access preamble to the base station, and receiving a random access response (RAR) from the base station.

CORESETs based on a first control resource set (CORESET) pool index and a second control resource set (CORESET) pool index are configured based on the configuration information.

The DCI includes information related to a physical downlink control channel (PDCCH) order. A random access procedure is initiated by the PDCCH order.

The information related to the PDCCH order includes a synchronization signal/physical broadcast channel block index (SSB index).

The random access preamble is transmitted based on the SSB index. The random access response (RAR) includes a timing advance command.

The SSB index is related to the first CORESET pool index or the second CORESET pool index.

A device according to another embodiment of the present disclosure comprises one or more memories and one or more processors operably connected to the one or more memories.

The one or more memories include instructions that configure the one or more processors to perform operations based on being executed by the one or more processors.

The operations include receiving configuration information related to a plurality of control resource sets (CORESETs) from a base station, receiving downlink control information (DCI) from the base station, transmitting a random access preamble to the base station, and receiving a random access response (RAR) from the base station.

CORESETs based on a first control resource set (CORESET) pool index and a second control resource set (CORESET) pool index are configured based on the configuration information.

The DCI includes information related to a physical downlink control channel (PDCCH) order. A random access procedure is initiated by the PDCCH order.

The information related to the PDCCH order includes a synchronization signal/physical broadcast channel block index (SSB index).

The random access preamble is transmitted based on the SSB index. The random access response (RAR) includes a timing advance command.

The SSB index is related to the first CORESET pool index or the second CORESET pool index.

One or more non-transitory computer readable mediums according to another embodiment of the present disclosure store one or more instructions.

The one or more instructions executable by one or more processors are configured to allow the one or more processors to perform operations.

The operations include receiving configuration information related to a plurality of control resource sets (CORESETs) from a base station, receiving downlink control information (DCI) from the base station, transmitting a random access preamble to the base station, and receiving a random access response (RAR) from the base station.

CORESETs based on a first control resource set (CORESET) pool index and a second control resource set (CORESET) pool index are configured based on the configuration information.

The DCI includes information related to a physical downlink control channel (PDCCH) order. A random access procedure is initiated by the PDCCH order.

The information related to the PDCCH order includes a synchronization signal/physical broadcast channel block index (SSB index).

The random access preamble is transmitted based on the SSB index. The random access response (RAR) includes a timing advance command.

The SSB index is related to the first CORESET pool index or the second CORESET pool index.

A method performed by a base station in a wireless communication system according to another embodiment of the present disclosure comprises transmitting configuration information related to a plurality of control resource sets (CORESETs) to a user equipment (UE), transmitting downlink control information (DCI) to the UE, receiving a random access preamble from the UE, and transmitting a random access response (RAR) to the UE.

CORESETs based on a first control resource set (CORESET) pool index and a second control resource set (CORESET) pool index are configured based on the configuration information.

The DCI includes information related to a physical downlink control channel (PDCCH) order, and a random access procedure is initiated by the PDCCH order.

The information related to the PDCCH order includes a synchronization signal/physical broadcast channel block index (SSB index).

The random access preamble is received based on the SSB index. The random access response (RAR) includes a timing advance command.

The SSB index is related to the first CORESET pool index or the second CORESET pool index.

A base station operating in a wireless communication system according to another embodiment of the present disclosure comprises one or more transceivers, one or more processors, and one or more memories operably connectable to the one or more processors. The one or more memories are configured to store instructions that allow the one or more processors to perform operations based on being executed by the one or more processors.

The operations include transmitting configuration information related to a plurality of control resource sets (CORESETs) to a user equipment (UE), transmitting downlink control information (DCI) to the UE, receiving a random access preamble from the UE, and transmitting a random access response (RAR) to the UE.

CORESETs based on a first control resource set (CORESET) pool index and a second control resource set (CORESET) pool index are configured based on the configuration information.

The DCI includes information related to a physical downlink control channel (PDCCH) order, and a random access procedure is initiated by the PDCCH order.

The information related to the PDCCH order includes a synchronization signal/physical broadcast channel block index (SSB index).

The random access preamble is received based on the SSB index. The random access response (RAR) includes a timing advance command.

The SSB index is related to the first CORESET pool index or the second CORESET pool index.

[ADVANTAGEOUS EFFECTS]

According to an embodiment of the present disclosure, a random access preamble is transmitted based on an SSB index indicated through DCI related to a PDCCH order. The SSB index is related to TRP (i.e., CORESET pool index).

As a result, the following effects can be derived.

1) A TRP-specific TA can be obtained through the existing RACH procedure initiated by the PDCCH order. Therefore, the terminal/base station implementation complexity can be reduced compared to configuring/defining new parameters or separate signaling for acquisition of TRP specific TA.

2) Before any uplink channel/signal transmission is performed, excluding PRACH transmission (i.e., random access preamble transmission), a TRP-specific TA can be acquired and utilized for UL transmission. For example, transmission of Msg3 (PUSCH) based on a random access procedure initiated by PDCCH order can be performed based on a TRP specific TA indicated via RAR.

3) The reliability of M-DCI-based TRP-specific UL scheduling/UL transmission can be improved by utilizing acquired TRP-specific TAs (improving uplink timing accuracy per TRP).

According to an embodiment of the present disclosure, when a Time Alignment Timer related to a TA expires, a random access preamble is transmitted based on an SSB index related to the expired Time Alignment Timer. The SSB index is related to a first CORESET pool index or a second CORESET pool index.

Therefore, the procedure performed after the Time Alignment Timer of the TRP-specific TA expires can be performed more efficiently in terms of acquisition/management of the TRP-specific TA. That is, after the Time Alignment Timer of a TRP-specific TA (e.g., TA1 for TRP1) expires, an incorrect TA can be prevented from being acquired due to the SSB index selected by the terminal (e.g., the SSB index related to TRP2).

Effects which may be obtained by the present disclosure are not limited to the aforementioned effects, and other technical effects not described above may be evidently understood by a person having ordinary skill in the art to which the present disclosure pertains from the following description.

[BRIEF DESCRIPTION OF THE DRAWINGS]

FIG. 1 illustrates MAC RAR according to an embodiment of the present disclosure.

FIG. 2 illustrates a timing advance command MAC CE according to an embodiment of the present disclosure.

FIG. 3 is a flowchart illustrating a method performed by a UE in a wireless communication system according to an embodiment of the present disclosure.

FIG. 4 is a flowchart illustrating a method performed by a base station in a wireless communication system according to another embodiment of the present disclosure.

FIG. 5 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Multi-Transmission/Reception Point (M-TRP) related operation

An M-TRP transmission scheme in which M TRPs transmit data to one user equipment (UE) may be divided into two main types, eMBB M-TRP transmission which is a scheme for increasing a transmission rate and URLLC M-TRP transmission which is a scheme for increasing a reception success rate and reducing latency.

MTRP URLLC

Hereinafter, in methods proposed in the present disclosure, DL MTRP-URLLC means that multiple TRPs transmit the same data/DCI using different layer/time/frequency resources. For example, TRP 1 transmits the same data/DCI in resource 1, and TRP 2 transmits the same data/DCI in resource 2. A UE that has been configured with a DL MTRP-URLLC transmission scheme receives the same data/DCI using different layer/time/frequency resources. In this instance, the UE is indicated by a base station which QCL RS/type (i.e., DL TCI state) should be used in the layer/time/frequency resources receiving the same data/DCI. For example, when the same data/DCI is received from the resource 1 and the resource 2, the UE is indicated a DL TCI state used in the resource 1 and a DL TCI state used in the resource 2. Since the UE receives the same data/DCI via the resource 1 and the resource 2, high reliability can be achieved. The DL MTRP- URLLC can be applied to PDSCH/PDCCH.

On the contrary, UL MTRP-URLLC means that multiple TRPs receive the same data/UCI from one UE using different layer/time/frequency resources. For example, TRP 1 receives the same data/UCI from a UE in resource 1, and TRP 2 receives the same data/UCI from the UE in resource 2. Then, the TRP 1 and the TRP 2 share the received data/UCI through a connected backhaul link between the TRPs. The UE that has been configured with an UL MTRP-URLLC transmission scheme transmits the same data/UCI using different layer/time/frequency resources. In this instance, the UE is indicated by the base station which Tx beam and which Tx power (i.e., UL TCI state) should be used in the layer/time/frequency resources transmitting the same data/UCI. For example, when the same data/UCI is transmitted in the resource 1 and the resource 2, the UE is indicated an UL TCI state used in the resource 1 and an UL TCI state used in the resource 2. The UL MTRP-URLLC can be applied to PUSCH/PUCCH.

SDCI or MDCI based MTRP Transmission

In addition, from a perspective of downlink control information (DCI) transmission, an M-TRP (multiple TRP) transmission scheme may be classified into i) a multiple-DCI (M-DCI) based M-TRP transmission scheme in which each TRP transmits different DCI and ii) a single DCI (S-DCI) based M-TRP transmission scheme in which one TRP transmits DCI. For example, in the S-DCI, since all scheduling information for data transmitted by M TRPs should be transmitted via one DCI, the S-DCI can be used in an ideal BackHaul (BH) environment in which dynamic cooperation between two TRPs is possible.

R16 NR MTRP Transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a method in which each TRP schedules and transmits PDSCH via DCI. That is, TRP 1 transmits PDSCH 1 via DCI 1, and TRP 2 transmits PDSCH 2 via DCI 2. When the PDSCH 1 and the PDSCH 2 overlap with the same frequency time resource, the two PDSCHs are received for the same RE, thereby increasing resource efficiency and increasing transmission capacity. To this end, the R16 standard has introduced a CORESET pool which is a group of multiple CORESETs, and the TRP 1 transmits PDCCH through a CORESET belonging to CORESET pool 0, and PDSCH scheduled by the corresponding PDCCH is also transmitted by the TRP 1. The TRP 2 transmits PDCCH through a CORESET belonging to CORESET pool 1, and PDSCH scheduled by the corresponding PDCCH is also transmitted by the TRP 2. For PUSCH, a specific TRP may schedule transmission of the PUSCH to a UE through a CORESET belonging to each COERSET pool. For PUCCH, the TRP 1 schedules some PUCCH resources to receive UCI, and the TRP 2 schedules remaining PUCCH resources to receive UCI. For the PUSCH or the PUCCH, channels scheduled/used by each TRP are TDMed with each other and do not overlap. Hence, an increase in the transmission capacity cannot be expected, but the UE can transmit independently the PUSCH/PUCCH to each of the TRP 1 and the TRP 2.

In addition, the UE may recognize PUSCH (or PUCCH) scheduled by DCI received via different CORESETs (or CORESETs belonging to different CORESET groups) as PUSCH (or PUCCH) transmitting to different TRPs, or recognize PUSCH (or PUCCH) of different TRPs. A scheme for UL transmission (e.g. PUSCH/PUCCH) transmitting to the different TRPs can be applied equally to UL transmission (e.g., PUSCH/PUCCH) transmitting to different panels belonging to the same TRP.

CORESET group IDs (or COERSET pool indexes with the same meaning) described/mentioned in the present disclosure may mean indexes/identification information (e.g. ID), etc. for distinguishing CORESETs for each TRP/panel. In addition, the CORESET group may be a group/union of CORESETs classified by indexes/identification information (e.g. ID)/CORESET group IDs, etc. for distinguishing the CORESETs for each TRP/panel. For example, the CORESET group ID may be specific index information defined in CORSET configuration. For example, the CORESET group may be configured/indicated/defined by an index defined in the CORESET configuration for each CORESET. And/or, the CORESET group ID may mean an index/identification information/indicator, etc. for distinguishing/identifying CORESETs configured/related to each TRP/panel, and the CORESET group ID described/mentioned in the present disclosure can be replaced and expressed with a specific index/specific identification information/specific indicator, etc. for distinguishing/identifying CORESETs configured/related to each TRP/panel. The CORESET group ID, i.e., a specific index/specific identification information/specific indicator for distinguishing/identifying CORESETs configured/related to each TRP/panel may be configured/indicated via higher layer signaling (e.g., RRC signaling)/L2 signaling (e.g., MAC-CE)/L1 signaling (e.g., DCI), and the like. For example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be managed/controlled separately for each TRP/panel in units of the corresponding CORESET group, and/or HARQ A/N (process/retransmission) for PDSCH/PUSCH, etc. scheduled for each TRP/panel may be managed in units of the corresponding CORESET group.

For example, higher layer parameter ControlResourceSet IE (information element) is used to configure a time/frequency control resource set (CORESET). For example, the control resource set (CORESET) may be related to detection and reception of downlink control information. The ControlResourceSet IE may include a CORESET related ID (e.g., controlResourceSetID)/an index of a CORESET pool for CORESET (e.g., CORESETPoolIndex)/time/frequency resource configuration of CORESET/TCI information related to CORESET, and the like. For example, the index of the CORESET pool (e.g., CORESETPoolIndex) may be set to 0 or 1. In the description, the CORESET group may correspond to the CORESET pool, and the CORESET group ID may correspond to the CORESET pool index (e.g., CORESETPoolIndex). ControlResourceSet (i.e., CORESET) may be configured via higher layer signaling (e.g., RRC).

R17 NR MTRP Transmission

In the R17 NR standard, MTRP PDCCH repetition transmission, MTRP PDCCH/PDSCH SFN transmission, S-DCI based MTRP PUSCH repetition transmission, and single PUCCH resource based MTRP PUCCH repetition transmission are supported. In all of these transmission schemes, the same contents (i.e., DCI or UL TB or UCI) are repeatedly transmitted as URLLC target enhancement for reliability increase. They are TDMed or FDMed and repeatedly transmitted in the MTRP PDCCH repetition transmission, they are repeatedly transmitted at the same time/frequency/layer in the MTRP PDCCH/PDSCH SFN transmission, they are TDMed in the S-DCI based MTRP PUSCH repetition transmission, and they are TDMed and repeatedly transmitted in the single PUCCH resource based MTRP PUCCH repetition transmission.

R17 MTRP SFN PDCCH

As a special case of the MTRP PDCCH repetition transmission, multiple TRPs may repeatedly transmit the same DCI through the same time/frequency/DMRS port, which may be referred to as SFN PDCCH transmission. However, for the SFN PDCCH transmission, a base station configures a plurality of TCI states to one CORESET instead of configuring a plurality of CORESETs with different TCI states. When a UE receives PDCCH candidates through an SS set connected to the one CORESET, the UE uses all the plurality TCI states to perform the channel estimation of PDCCH DMRS and attempt the decoding.

R17 MTRP SFN PDSCH

When the MTRP PDCCH repetition transmission is performed, two TRPs repeatedly transmit a corresponding channel to different resources. However, in a special case, when resources used by the two TRPs are the same, that is, when the same channel is repeatedly transmitted through the same frequency, time, and layer (= DMRS port), the reliability of the corresponding channel can be improved. In this case, the same channel, which is transmitted repeatedly, is recognized as one channel from a perspective of a receiving end because the resources are not distinguished and are combined and received in the air. In the R17 NR standard, two DL TCI states for PDSCH DMRS reception may be configured for the PDSCH SFN transmission.

R17 single PUCCH resource based MTRP PUCCH repetition transmission

In the R17 NR standard, the base station activates/configures two spatial relation infos in a single PUCCH resource (activates/configures two power control (PC) parameter sets in FR1) to the UE for the single PUCCH resource based MTRP PUCCH transmission, and the UE uses each spatial relation info to indicate the spatial relation info toward each of TRP 1 and TRP 2 when UL UCI is transmitted through the corresponding PUCCH resource. For example, the UE is indicated Tx beam/PC parameters toward the TRP 1 through a value indicated in first spatial relation info, and the UE performs PUCCH transmission in a TO corresponding to the TRP 1 using this information. In the same manner, the UE is indicated Tx beam/PC parameters toward the TRP 2 through a value indicated in second spatial relation info, and the UE performs PUCCH transmission in a TO corresponding to the TRP 2 using this information.

In the Rel 17 standardization meeting, for the MTRP PUCCH repetition transmission, a configuration scheme has been enhanced so that the two spatial relation infos can be configured in the PUCCH resource. That is, if a PC parameter such as PLRS, Alpha, P0, and closed loop index is set for each spatial relation info, a spatial relation RS may be configured. As a result, PC information and spatial relation RS information corresponding to two TRPs can be configured through the two spatial relation infos, and the UE transmits the PUCCH using the first spatial relation info in TO 1 and transmits the same UCI (i.e., CSI, ACKNAK, SR) PUCCH using the second spatial relation info in TO 2. Hereinafter, the PUCCH resource configured with two spatial relation infos is referred to as an MTRP PUCCH resource, and the PUCCH resource configured with one spatial relation info is referred to as an STRP PUCCH resource.

Meaning of TCI state/beam indication

In the following methods proposed in the present disclosure, using (/mapping) a specific TCI state (or TCI) when receiving data/DCI/UCI for which frequency/time/spatial resources may mean, for DL, estimating a channel from DMRS and receiving/demodulating the data/DCI on the estimated channel using QCL type and QCL RS indicated by a corresponding DL TCI state in the frequency/time/spatial resources. For UL, it may mean transmitting/demodulating DMRS and data/UCI using Tx beam and/or Tx power indicated by a corresponding UL TCI state in the frequency/time/-spatial resources.

The UL TCI state contains Tx beam or Tx power information of the UE and may be configured to the UE through another parameter such as spatial relation info instead of the TCI state. The UL TCI state may be indicated directly to UL grant DCI or may mean spatial relation info of SRS resources indicated through an SRI field of the UL grant DCI. Alternatively, the UL TCI state may mean an OL Tx power control parameter (j: index for open loop parameters Po & alpha (maximum 32 parameter value sets per cell), q_d: index of DL RS resource for PL measurement (maximum 4 measurements per cell), 1: closed loop power control process index (maximum 2 processes per cell)) connected to a value indicated through the SRI field of the UL grant DCI. Alternatively, in the R17 NR, the UL TCI state may indicate an UL TCI using the DL grant DCI.

For convenience of explanation, the present disclosure has applied proposal methods assuming cooperative transmission/reception between two TRPs, but it can be extended and applied in 3 or more multi-TRP environments and can be extended and applied in a multi-panel environment. Different TRPs may be recognized by the UE as different TCI states, and the fact that the UE receives/transmits data/DCI/UCI using TCI state 1 means that the UE receives/transmits data/DCI/UCI from/to TRP 1.

In the present disclosure, a transmission occasion (TO) means each channel transmitted at a different time when multiple channels are TDMed, means each channel transmitted in a different frequency/RB when the multiple channels are FDMed, and means each channel transmitted on a different layer/beam/DMRS port when the multiple channels are SDMed. Each TO is mapped to one TCI state. When the same channel is repeatedly transmitted, complete DCI/data/UCI is transmitted to one TO, and the receiving end receives multiple TOs to increase a reception success rate.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be based on Table 1 below.

[Table 1]

| |
|---|
| Uplink frame number *i* for transmission from the UE shall start $T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}}$ before the start of the corresponding downlink frame at the UE where<br><br>  - $N_{\mathrm{TA}}$ and $N_{\mathrm{TA,offset}}$ are given by clause 4.2 of [5, TS 38.213], except for msgA transmission on PUSCH where $N_{\mathrm{TA}}$ = 0 shall be used;<br><br>  - $N_{\mathrm{TA,adj}}^{\mathrm{common}}$ given by clause 4.2 of [5, TS 38.213] is derived from the higher-layer parameters *TACommon, TACommonDrift,* and *TACommonDriftVariation* if configured, otherwise $N_{\mathrm{TA,adj}}^{\mathrm{common}} = 0$;<br><br>  - $N_{\mathrm{TA,adj}}^{\mathrm{UE}}$ given by clause 4.2 of [5, TS 38.213] is computed by the UE based on UE position and serving-satellite-ephemeris-related higher-layers parameters if configured, otherwise $N_{\mathrm{TA,adj}}^{\mathrm{UE}} = 0$. |

In Table 1, $T_{TA}$ may be calculated/determined based on $N_{\mathrm{TA}}$ and $N_{\mathrm{TA,offset}}$. $N_{\mathrm{TA}}$ and $N_{\mathrm{TA,offset}}$ may be configured/applied as follows.

$N_{\mathrm{TA}}$: 1) configuring through a random access response (RAR) and 2) configuring through timing advance command (MAC-CE)
$N_{\mathrm{TA,offset}}$: 1) configuring a specific value per serving cell and 2) applying a pre-defined value based on duplex mode/FR suitably to the serving cell

A method of configuring/applying $N_{\mathrm{TA,offset}}$ and $N_{\mathrm{TA}}$ described above is described in detail below.

$N_{\mathrm{TA,offset}}$

Case 1) Method of configuring a specific value per serving cell

For example, a UE may receive configuration information (e.g., ServingCellConfigCommon Information) including information on $N_{\mathrm{TA,offset}}$ from a base station. The configuration information may be received based on RRC signaling. Table 2 below shows the configuration information.

[121] 【Table 2】

| |
|---|
| – *ServingCellConfigCommon* |
| The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync. |
| ***ServingCellConfigCommon* information element** |
| -- ASN1START |
| -- TAG-SERVINGCELLCONFIGCOMMON-START |
| |
| ServingCellConfigCommon ::=          SEQUENCE { |
|     physCellId                                                PhysCellId OPTIONAL,     -- Cond HOAndServCellAdd, |
|     downlinkConfigCommon                                      DownlinkConfigCommon OPTIONAL,     -- Cond HOAndServCellAdd |
|     uplinkConfigCommon                                        UplinkConfigCommon OPTIONAL,     -- Need M |
|     supplementaryUplinkConfig                                 UplinkConfigCommon OPTIONAL,     -- Need S |
|     n-TimingAdvanceOffset                           ENUMERATED  {  n0,  n25600,  n39936  } OPTIONAL,     -- Need S |
|     (...) |
| } |
| -- TAG-SERVINGCELLCONFIGCOMMON-STOP |
| -- ASN1STOP |
| ***n-TimingAdvanceOffset*** |
| The N_TA-Offset to be applied for all uplink transmissions on this serving cell. If the field is absent, the UE applies the value defined for the duplex mode and frequency range of this serving cell. See TS 38.133 [14], table 7.1.2-2. |

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 3 below shows the value of $N_{TA,offset}$.

[124]　　【Table 3】

| Table 7.1.2-2: The Value of $N_{\text{TA offset}}$ | |
|---|---|
| **Frequency range and band of cell used for uplink transmission** | $N_{\text{TA offset}}$ **(Unit: $T_C$)** |
| FR1 FDD or TDD band with neither E-UTRA–NR nor NB-IoT–NR coexistence case | 25600 (Note 1) |
| FR1 FDD band with E-UTRA–NR and/or NB-IoT–NR coexistence case | 0 (Note 1) |
| FR1 TDD band with E-UTRA–NR and/or NB-IoT–NR coexistence case | 39936 (Note 1) |
| FR2 | 13792 |

[1]　Note 1:　　　The UE identifies $N_{\text{TA offset}}$ based on the information n-TimingAdvanceOffset as specified in TS 38.331 [2]. If UE is not provided with the information n-TimingAdvanceOffset, the default value of $N_{\text{TA offset}}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{\text{TA offset}}$ can also be provided for a FDD serving cell.

[2]　Note 2:　　　Void

$N_{TA}$

Case 1) Method of configuring through a random access response (RAR)

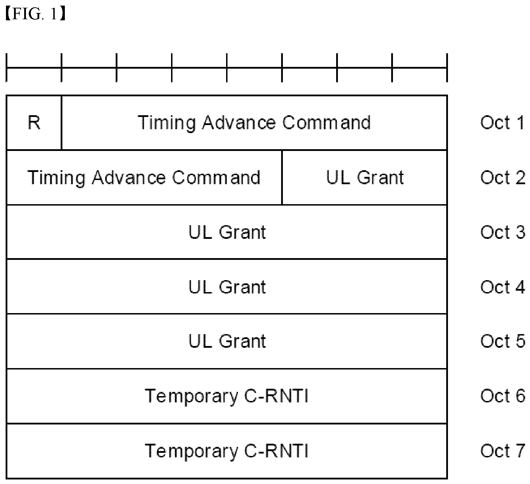

For example, in a random access procedure (e.g., 2-step RACH procedure or 4-step RACH procedure), a UE may receive an RAR from a base station. $N_{TA}$ may be determined/configured based on the RAR. Specifically, the RAR may include a timing advance command. The timing advance command indicates an index value (e.g., index value TA) related to timing adjustment. $N_{TA}$ may be determined based on the index value (see Table 5 below). The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. Table 4 below shows MAC payload of the MAC RAR.

[Table 4]

6.2.3 MAC payload for Random Access Response

The MAC RAR is of fixed size as depicted in Figure 6.2.3-1, and consists of the following fields:

- R: Reserved bit, set to 0;

- Timing Advance Command: The Timing Advance Command field indicates the index value $T_A$ used to control the amount of timing adjustment that the MAC entity has to apply in TS 38.213 [6]. The size of the Timing Advance Command field is 12 bits;

- UL Grant: The Uplink Grant field indicates the resources to be used on the uplink in TS 38.213 [6]. The size of the UL Grant field is 27 bits;

- Temporary C-RNTI: The Temporary C-RNTI field indicates the temporary identity that is used by the MAC entity during Random Access. The size of the Temporary C-RNTI field is 16 bits. The MAC RAR is octet aligned.

Table 5 below shows transmission timing adjustments based on the timing advance command.

[Table 5]

4.2 Transmission timing adjustments

(continued)

> A UE can be provided a value $N_{TA,offset}$ of a timing advance offset for a serving cell by *n-TimingAdvanceOffset* for the serving cell. If the UE is not provided *n-TimingAdvanceOffset* for a serving cell, the UE determines a default value $N_{TA,offset}$ of the timing advance offset for the serving cell as described in [10, TS 38.133].
>
> Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG.
>
> A timing advance command [11, TS 38.321] in case of random access response or in an absolute timing advance command MAC CE, $T_A$, for a TAG indicates $N_{TA}$ values by index values of $T_A = 0, 1, 2, ..., 3846$, where an amount of the time alignment for the TAG with SCS of $2^\mu \cdot 15$ kHz is $N_{TA} = T_A \cdot 16 \cdot 64/2^\mu$. $N_{TA}$ is defined in [4, TS 38.211] and is relative to the SCS of the first uplink transmission from the UE after the reception of the random access response or absolute timing advance command MAC CE.
>
> In other cases, a timing advance command [11, TS 38.321], $T_A$, for a TAG indicates adjustment of a current $N_{TA}$ value, $N_{TA\_old}$, to the new $N_{TA}$ value, $N_{TA\_new}$, by index values of $T_A = 0, 1, 2,..., 63$, where for a SCS of $2^\mu \cdot 15$ kHz, $N_{TA\_new} = N_{TA\_old} + (T_A - 31) \cdot 16 \cdot 64/2^\mu$.
>
> Adjustment of an $N_{TA}$ value by a positive or a negative amount indicates advancing or delaying the uplink transmission timing for the TAG by a corresponding amount, respectively.

Case 2) Method of configuring through timing advance command (MAC-CE)

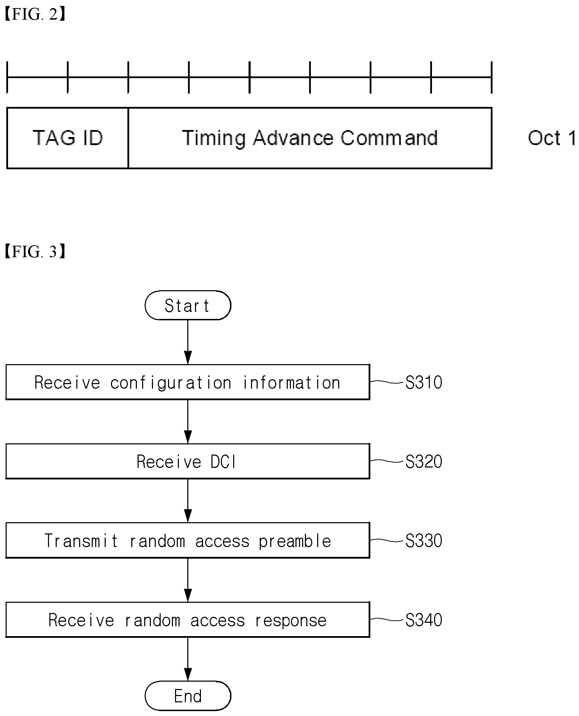

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted (see Table 5). The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. Table 6 below shows payload of the timing advance command MAC CE.

[Table 6]

> 6.1.3.4 Timing Advance Command MAC CE
>
> The Timing Advance Command MAC CE is identified by MAC subheader with LCID as specified in Table 6.2.1-1. It has a fixed size and consists of a single octet defined as follows (Figure 6.1.3.4-1):
>
> - TAG Identity (TAG ID): This field indicates the TAG Identity of the addressed TAG. The TAG containing the SpCell has the TAG Identity 0. The length of the field is 2 bits;
>
> - Timing Advance Command: This field indicates the index value $T_A$ (0, 1, 2... 63) used to control the amount of timing adjustment that MAC entity has to apply (as specified in TS 38.213 [6]). The length of the field is 6 bits.

Timing Advance Group (TAG)

A timing advance group (TAG) refers to a group of serving cells that use the same timing advance value. Table 7 below shows definition of the TAG and configuration information related to the TAG.

[140] 【Table 7】

> **Timing Advance Group**: A group of Serving Cells that is configured by RRC and that, for the cells with a UL configured, using the same timing reference cell and the same Timing Advance value. A Timing Advance Group

containing the SpCell of a MAC entity is referred to as Primary Timing Advance Group (PTAG), whereas the term Secondary Timing Advance Group (STAG) refers to other TAGs.

*TAG-Config*

The IE *TAG-Config* is used to configure parameters for a time-alignment group.

**TAG-Config information element**

-- ASN1START

-- TAG-TAG-CONFIG-START


```
TAG-Config ::=                      SEQUENCE {
    tag-ToReleaseList                       SEQUENCE (SIZE (1..maxNrofTAGs)) OF TAG-Id
OPTIONAL,    -- Need N
    tag-ToAddModList                        SEQUENCE (SIZE (1..maxNrofTAGs)) OF TAG
OPTIONAL    -- Need N
}


TAG ::=                      SEQUENCE {
    tag-Id                   TAG-Id,
    timeAlignmentTimer              TimeAlignmentTimer,
    ...
}


TAG-Id ::=                    INTEGER (0..maxNrofTAGs-1)
```

| tag-Id |
| --- |
| Indicates the TAG of the SpCell or an SCell, see TS 38.321 [3]. Uniquely identifies the TAG within the scope of a Cell Group (i.e. MCG or SCG). |
| **timeAlignmentTimer** |
| The timeAlignmentTimer for TAG with ID tag-Id, as specified in TS 38.321 [3]. |
| **maxNrofTAGs**       INTEGER ::= 4 -- Maximum number of Timing Advance Groups |

–       *CellGroupConfig*

The *CellGroupConfig* IE is used to configure a master cell group (MCG) or secondary cell group (SCG). A cell group comprises of one MAC entity, a set of logical channels with associated RLC entities and of a primary cell (SpCell) and one or more secondary cells (SCells).

**CellGroupConfig information element**

-- ASN1START

-- TAG-CELLGROUPCONFIG-START

-- Configuration of one Cell-Group:

CellGroupConfig ::=                      SEQUENCE {

```
cellGroupId                          CellGroupId,
    rlc-BearerToAddModList                        SEQUENCE  (SIZE(1..maxLC-ID)) OF RLC-
BearerConfig                  OPTIONAL,    -- Need N
    rlc-BearerToReleaseList                       SEQUENCE  (SIZE(1..maxLC-ID))  OF
LogicalChannelIdentity            OPTIONAL,    -- Need N
    mac-CellGroupConfig                               MAC-CellGroupConfig
```

```
OPTIONAL,    -- Need M
    physicalCellGroupConfig                             PhysicalCellGroupConfig
OPTIONAL,    -- Need M
    spCellConfig                                 SpCellConfig
OPTIONAL,    -- Need M
    sCellToAddModList                   SEQUENCE  (SIZE (1..maxNrofSCells)) OF
SCellConfig               OPTIONAL,    -- Need N
    sCellToReleaseList                   SEQUENCE  (SIZE (1..maxNrofSCells)) OF
SCellIndex                OPTIONAL,    -- Need N
(…)
```

**MAC-CellGroupConfig**

The IE MAC-CellGroupConfig is used to configure MAC parameters for a cell group, including DRX.

***MAC-CellGroupConfig information element***

-- ASN1START

-- TAG-MAC-CELLGROUPCONFIG-START

```
MAC-CellGroupConfig ::=               SEQUENCE {
    drx-Config                                  SetupRelease  {  DRX-Config  }
OPTIONAL,    -- Need M
    schedulingRequestConfig                             SchedulingRequestConfig
OPTIONAL,    -- Need M
    bsr-Config                                       BSR-Config
OPTIONAL,    -- Need M
    tag-Config                                       TAG-Config
OPTIONAL,    -- Need M
    phr-Config                                  SetupRelease  {  PHR-Config  }
OPTIONAL,    -- Need M
    skipUplinkTxDynamic               BOOLEAN,
(…)
```

**CellGroupId**

The IE CellGroupId is used to identify a cell group. Value 0 identifies the master cell group. Other values identify secondary cell groups. In this version of the specification only values 0 and 1 are supported.

***CellGroupId information element***

**-- ASN1START**

```
-- TAG-CELLGROUPID-START
CellGroupId ::=                                    INTEGER (0.. maxSecondaryCellGroups)
-- TAG-CELLGROUPID-STOP
-- ASN1STOP
```
```
maxSecondaryCellGroups INTEGER ::= 3
```

Procedure

Uplink time alignment may be performed based on Table 8 below.

[Table 8]

5.2 Maintenance of Uplink Time Alignment

RRC configures the following parameters for the maintenance of UL time alignment:

- *timeAlignmentTimer* (per TAG) which controls how long the MAC entity considers the Serving Cells belonging to the associated TAG to be uplink time aligned;

- *inactivePosSRS-TimeAlignmentTimer* which controls how long the MAC entity considers the Positioning SRS transmission in RRC_INACTIVE in clause 5.26 to be uplink time aligned;

- *cg-SDT-TimeAlignmentTimer* which controls how long the MAC entity considers the uplink transmission for CG-SDT to be uplink time aligned.

The MAC entity shall:

1> when a Timing Advance Command MAC CE is received, and if an $N_{TA}$ (as defined in TS 38.211 [8]) has been maintained with the indicated TAG:

2> apply the Timing Advance Command for the indicated TAG;

2> if there is ongoing Positioning SRS Transmission in RRC_INACTIVE as in clause 5.26:

3> start or restart the *inactivePosSRS-TimeAlignmentTimer* associated with the indicated TAG.

2> if CG-SDT procedure triggered as in clause 5.27 is ongoing:

3> start or restart the *cg-SDT-TimeAlignmentTimer* associated with the indicated TAG.

2> else:

3> start or restart the *timeAlignmentTimer* associated with the indicated TAG.

1> when a Timing Advance Command is received in a Random Access Response message for a Serving Cell belonging to a TAG or in a MSGB for an SpCell:

2> if the Random Access Preamble was not selected by the MAC entity among the contention-based Random Access Preamble:

3> apply the Timing Advance Command for this TAG;

3> start or restart the *timeAlignmentTimer* associated with this TAG.

2> else if the *timeAlignmentTimer* associated with this TAG is not running:

3> apply the Timing Advance Command for this TAG;

3> start the *timeAlignmentTimer* associated with this TAG;

3> when the Contention Resolution is considered not successful as described in clause 5.1.5; or

3> when the Contention Resolution is considered successful for SI request as described in clause 5.1.5, after transmitting HARQ feedback for MAC PDU including UE Contention Resolution Identity MAC CE:

4> stop *timeAlignmentTimer* associated with this TAG.

3> when the Contention Resolution is considered not successful as described in clause 5.1.5:

4> if CG-SDT procedure triggered as in clause 5.27 is ongoing:

5> set the $N_{TA}$ value to the value before applying the received Timing Advance Command as in TS 38.211 [8].

3> when the Contention Resolution is considered successful for Random Access procedure while the CG-SDT procedure is ongoing:

4> stop *timeAlignmentTimer* associated with this TAG;

4> start or restart the *cg-SDT-TimeAlignmentTimer* associated with this TAG.

3> when the Contention Resolution is considered successful for Random Access procedure while SRS transmission in RRC _INACTIVE is ongoing:

4> start or restart the *inactivePosSRS-TimeAlignmentTimer* associated with this TAG.

2> else:

3> ignore the received Timing Advance Command.

1> when an Absolute Timing Advance Command is received in response to a MSGA transmission including C-RNTI MAC CE as specified in clause 5.1.4a:

2> apply the Timing Advance Command for PTAG;

2> if there is ongoing Positioning SRS Transmission in RRC_INACTIVE as in clause 5.26:

3> start or restart the *inactivePosSRS-TimeAlignmentTimer* associated with the indicated TAG.

2> if CG-SDT procedure is ongoing:

3> start or restart the *cg-SDT-TimeAlignmentTimer* associated with PTAG.

2> else:

3> start or restart the *timeAlignmentTimer* associated with PTAG.

1> when the indication is received from upper layer for stopping the *inactivePosSRS-TimeAlignmentTimer:*

2> stop the *inactivePosSRS-TimeAlignmentTimer.*

1> when the indication is received from upper layer for starting the *inactivePosSRS-TimeAlignmentTimer:*

2> start or restart the *inactivePosSRS-TimeAlignmentTimer.*

1> when instruction from the upper layer has been received for starting the *cg-SDT-TimeAlignmentTimer:*

2> start the *cg-SDT-TimeAlignmentTimer.*

1> when instruction from the upper layer has been received for stopping the *cg-SDT-TimeAlignmentTimer:*

2> consider the *cg-SDT-TimeAlignmentTimer* as expired.

1> when instruction from the upper layer has been received for starting the *TimeAlignmentTimer* associated with PTAG:

2> start the *TimeAlignmentTimer* associated with PTAG.

1> when a *timeAlignmentTimer* expires:

2> if the *timeAlignmentTimer* is associated with the PTAG:

3> flush all HARQ buffers for all Serving Cells;

3> notify RRC to release PUCCH for all Serving Cells, if configured,

3> notify RRC to release SRS for all Serving Cells, if configured;

3> clear any configured downlink assignments and configured uplink grants;

3> clear any PUSCH resource for semi-persistent CSI reporting;

3> consider all running *timeAlignmentTimers* as expired;

3> maintain $N_{TA}$ (defined in TS 38.211 [8]) of all TAGs.

2> else if the *timeAlignmentTimer* is associated with an STAG, then for all Serving Cells belonging to this TAG:

3> flush all HARQ buffers;

3> notify RRC to release PUCCH, if configured,

3> notify RRC to release SRS, if configured;

3> clear any configured downlink assignments and configured uplink grants;

3> clear any PUSCH resource for semi-persistent CSI reporting;

3> maintain $N_{TA}$ (defined in TS 38.211 [8]) of this TAG.

1> when the *inactivePosSRS-TimeAlignmentTimer* expires:

2> notify RRC to release Positioning SRS for RRC_INACTIVE configuration(s).

1> when the *cg-SDT-TimeAlignmentTimer* expires:

2> clear any configured uplink grants;

2> if a PDCCH addressed to the MAC entity's C-RNTI after initial transmission for the CG-SDT with CCCH message has not been received:

3> consider ongoing CG-SDT procedure as terminated;

3> indicate the expiry of *cg-SDT- TimeAlignmentTimer* to the upper layer.

2> flush all HARQ buffers;

2> maintain $N_{TA}$ (defined in TS 38.211 [8]) of this TAG.

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the *timeAlignmentTimer* associated with the SCell as expired.

(continued)

The MAC entity shall not perform any uplink transmission on a Serving Cell except the Random Access Preamble and MSGA transmission when the *timeAlignmentTimer* associated with the TAG to which this Serving Cell belongs is not running, CG-SDT procedure is not ongoing or SRS transmission in RRC_INACTIVE as in clause 5.26 is not on-going.

Furthermore, when the *timeAlignmentTimer* associated with the PTAG is not running, CG-SDT procedure is not ongoing and SRS transmission in RRC_INACTIVE as in clause 5.26 is not ongoing, the MAC entity shall not perform any uplink transmission on any Serving Cell except the Random Access Preamble and MSGA transmission on the SpCell.

The MAC entity shall not perform any uplink transmission except the Random Access Preamble and MSGA transmission when the cg-SDT-TimeAlignmentTimer is not running during the ongoing CG-SDT procedure as triggered in clause 5.27. The MAC entity shall not perform any uplink transmission except the Random Access Preamble and MSGA transmission when inactivePosSRS-TimeAlignmentTimer is not running during the procedure for SRS transmission in RRC_INACTIVE as in clause 5.26.

The contents of the foregoing (Multi-TRP and Timing Advance, etc.) may be applied in combination with the methods proposed in this specification, which will be described later, or may be supplemented to clarify the technical characteristics of the methods proposed in this specification. The methods described below are only classified for convenience of explanation, and some components of one method may be substituted with some components of another method or may be applied in combination with each other.

Hereinafter, i) a method for the base station to configure/indicate multiple TAs for a specific CC/BWP in uplink transmission of the terminal and ii) a method for the terminal to request/acquire multiple TAs are described, and subsequent terminal operations are proposed.

According to the 3GPP standard up to NR Rel-17, timing advance (TA) configuration for UE uplink transmission of the base station to compensate for a propagation delay between the base station and the UE can be performed via higher layer signaling. In addition, TA for specific cell(s) can be separately configured/managed through the concept/definition of a timing advance group (TAG).

Up to now, a method of supporting multiple TA values within a specific cell has not been supported. However, considering a scenario in which there is a large difference in distance from different target TRPs to the UE upon M-TRP UL transmission, enhancement will be performed so that a plurality of (two) TA values can be set/indicated in a specific CCBWP.

In this case, it is necessary to discuss how the base station configures/indicates the plurality of TA values to the UE or/and how a connection relationship between the plurality of TA values and UE UL channel/RS is performed. As described in Rel-18 MIMO WID objective (RP-213598) of Table 9 below, the configuration of TA values for multi-DCI (M-DCI) based M-TRP operation is considered.

[Table 9]

5. Study, and if justified, specify the following
- Two TAs for UL multi-DCI for multi-TRP operation
- Power control for UL single DCI for multi-TRP operation where unified TCI framework

extension in objective 2 is assumed.
For the case of simultaneous UL transmission from multiple panels, the operation will only be limited to the objective 6 scenarios.

Here, the TA (TA value) may be based on the description of FIG. 2 and the contents described in the above timing advance (TA) related procedure.

In the RAN1 and RAN2 standards before Rel-18, a base station manages a UE TA value based on values of $N_{TA}$ and $N_{TA,offset}$. The base station may set $N_{TA}$ as follows. The base station may set $N_{TA}$ based on i) RAR MAC CE or ii) TA command MAC CE. In addition, the base station may configure the UE with up to four TAGs with respect to a specific cell or cell combination using the concept of a timing advance group (TAG). The base station may perform update/management for the $N_{TA}$ value for each TAG. In other words, the $N_{TA}$ value related to uplink timing of the UE may be determined/set based on the RAR MAC CE/TA command MAC CE for each TAG.

In Rel-18 MIMO, in order to support different TA values of the UE based on a target TRP, i) the base station may configure two TRP-specific values in a specific CC/BWP for the $N_{TA}$ (or/and $N_{TA,offset}$) value, or ii) the base station may configure a separate parameter (e.g., $N_{TA,TRP1}$ and/or $N_{TA,TRP2}$) in a specific CC/BWP via MAC CE signaling so as to configure/assign a TRP-specific TA offset value in addition to the $N_{TA}$ or/and $N_{TA,offset}$ value. In the method ii), in the calculation of the existing TA value of the UE, it may be necessary to additionally subtract/add the TA offset due to the separate parameter. In the following, two TA values managed by the methods i) or/and ii) may be expressed as TA1 (or first TA) and TA2 (or second TA). In this instance, the two TA values may correspond to two TAGs. For example, the TA1 corresponding to TRP1 may be related to TAG 1, and the TA2 corresponding to TRP2 may be related to TAG 2.

As described in WID, a scenario to support two TA values is M-DCI based M-TRP operation. In the M-DCI based M-TRP operation, each TRP may be classified based on CORESET pool indexes associated with CORESET(s) existing in a BWP. Based on the CORESET pool indexes, each TRP may be classified into i) a TRP performing DL transmission (i.e., PDCCH, PDSCH) or/and ii) a target TRP for UL transmission. For example, CORESET 0 and 1 set to CORESET pool index 0 may correspond to TRP 1, and CORESET 2 and 3 set to CORESET pool index 1 may correspond to TRP 2.

In the unified TCI framework introduced in Rel-17 MIMO, the base station may dynamically indicate a specific reference RS to be used as a common beam for DL/UL receive (Rx)/transmit (Tx) beam of the UE using a DL/UL joint TCI state and/or a DL/UL separate TCI state.

The DL/UL joint TCI state may be based on a joint TCI state configured for UL and DL operations. When unifiedTCI-StateType of a serving cell is set to 'joint', the joint TCI state may be configured based on dl-OrJointTCI-StateList.

The DL/UL separate TCI state may be based on a DL TCI state and/or an UL TCI state. When unifiedTCI-StateType of the serving cell is set to 'separate', the DL TCI state may be configured based on dl-OrJointTCI-StateList, and the UL TCI state may be configured based on ul-TCI-ToAddModList.

The TCI state (e.g., joint/DL TCI state) may be indicated/configured based on d1-OrJoint-TCIStateList within PDSCH-config. The dl-OrJoint-TCIStateList may i) provide a list of up to 128 TCI states (explicitlist → dl-OrJointTCI-StateToAddModList) or ii) indicate a serving cell and a (DL/UL) BWP in which the list of TCI states (dl-OrJointTCI-StateToAddModList) is defined (unifiedTCI-StateRef → ServingCellAndBWP-Id). The TCI state (e.g., joint/DL TCI state) may provide reference RSs for DM-RS of PDSCH, DM-RS of PDCCH, and quasi co-location of CSI-RS. The TCI state (e.g., joint TCI state) may provide reference RSs for determining a dynamic grant based PUSCH, a configured grant based PUSCH, and an uplink (UL) Tx spatial filter for PUCCH resources and SRS.

The UL TCI state may be indicated/configured by ul-TCI-StateList within BWPUplinkDedicated. The ul-TCI-StateList may i) provide a list of up to 64 UL TCI states (explicitlist → ul-TCI-ToAddModList) or ii) indicate a serving cell and an UL BWP in which UL TCI states applicable to the UL BWP are defined (unifiedTCI-StateRef → ServingCellAndBWP-Id).

Rx/Tx beam of DL/UL channel/RS that is not a common beam target may be configured as follows. The TCI state of the unified TCI framework may be configured for each channel/RS based on RRC and MAC CE signaling.

Until Rel-17, standardization was carried out only when M/N, which is the number of DL/UL common beams to be supported in the unified TCI framework (the number of DL/UL TCI states), was M/N = 1. In other words, the unified TCI framework was not supported for M-TRP. Specifically, in a serving cell in which two CORESET pool indexes are set (more than one value for the coresetPoolIndex), unifiedTCI-StateType is not set.

Here, M/N denotes the number of DL common beams (M) and/or the number of UL common beams (N). For example, M/N = 1 may mean that the number of DL common beams (DL TCI state) and/or the number of UL common beams (UL TCI state) is 1. For example, M/N = 1 may mean that the number of DL and UL common beams (joint TCI states) is 1.

If M/N > 1 is supported in Rel-18, two or more TCI states and source/target TRP may have a connection relationship.

In particular, in the M-DCI based M-TRP operation, two or more TCI states corresponding to M/N > 1 may have a connection relationship with the CORESET pool indexes. As discussed above, the two TA values for multiple TRPs may be configured/indicated by higher layer signaling, such as MAC CE, in the same manner as the existing standard.

In the case of a UE (UE after Rel-17) that supports the unified TCI applied to FR 2, a plurality of TA values may be connected/corresponded to two or more TCI states corresponding to M/N > 1. For example, when M/N = 2 or/and N = 2, a (first/lowest) TCI state firstly configured/indicated may correspond to TA1 (e.g., TAG 1 or TA1 for TAG 1), and a (second/second-lowest) TCI state secondly configured/indicated may correspond to TA2 (e.g., TAG 2 or TA2 for TAG 2).

Specifically, a specific payload may be included/added/defined in the MAC CE to configure/assign/activate the TA value to each of the two or more TCI states corresponding to M/N > 1. For example, a payload for a target TCI state(s) (group) for assigning each TA value (e.g., TA1 and TA2) may exist in an MAC CE message configuring the two TA values.

Agreements for the plurality of TA values are shown in Table 10 below.

[Table 10]

| Agreement |
|---|
| Enhancement on two TAs for UL multi-DCI for multi-TRP operation is supported in Rel-18. |

(continued)

Note 1: whether (1) the network signals two TACs or (2) the network signals one TAC and the UE deriving the second TA can be further studied.

Note 2: evaluations can be considered on as-needed basis.

**Agreement**

Support two TA enhancement for both intra-cell and inter-cell multi-DCI multi-TRP scenarios in Rel-18.

**Agreement**

Enhancements on two TAs for UL multi-DCI for multi-TRP operation are applicable to both FR1 and FR2.

**Agreement**

Two TA enhancement for uplink multi-DCI based multi-TRP operation are applicable to **at least:**

• TDM based multi-DCI uplink transmission

• simultaneous multi-DCI uplink transmission (if simultaneous uplink multi-DCI uplink transmission is supported in Agenda 9.1.4.1)

• Note: Whether two TA enhancement is applicable to other schemes is a separate discussion, which is not in the scope of AI 9.1.1.2.

**Agreement**

For multi-DCI based multi-TRP operation with two TAs, support configuring two TAGs belonging to a serving cell.

**Agreement**

For multi-DCI based multi-TRP operation with two TAs, study the impact of two TAs for the following:

- RACH triggered by PDCCH order in intra-cell MTRP case

- RACH triggered by PDCCH order in inter-cell MTRP case

o Which might require RACH enhancement as well

- UE triggered RACH by CBRA or CFRA in RRC connected mode

**Agreement**

For multi-DCI multi-TRP operation with two TAs, up to two n-TimingAdvanceOffset value per serving cell is supported

**Agreement**

Multi-DCI multi-TRP operation with two TAs is supported for Rel-15/16/17 TCI frameworks and unified TCI framework extension discussed in 9.1.1.1 as well as UL beam indication via spatial relation.

**Agreement**

For inter-cell multi-DCI based Multi-TRP operation with two TA enhancement, support one of the alternatives (down selection to be done in RAN1#111):

• Alt 1: PDCCH scheduling RAR will always be received from serving cell → there is no need for additional type 1 CSS configuration per additional PCI

• Alt 2: In addition to PDCCH scheduling RAR being received from serving cell, reception of PDCCH scheduling RAR from a TRP corresponding to an additional PCI for a RACH procedure associated to the additional PCI is supported

→ additional type 1 CSS configuration per additional PCI needs to be supported

**Agreement**

---

For multi-DCI based inter-cell Multi-TRP operation with two TA enhancement, support PRACH configuration associated with additional configured PCIs different from the PCI of the serving cell.

**Agreement**

For multi-DCI based inter-cell Multi-TRP operation with two TA enhancement, support a mechanism to determine which PRACH configuration (i.e., RACH configuration corresponding to serving cell PCI or an additional PCI) to be used in the RACH procedure triggered by PDCCH order

**Agreement**

For multi-DCI based Multi-TRP operation with two TA enhancement, support one of the following alternatives in RAN1#111:

• Alt 1: PDCCH order sent by one TRP triggers RACH procedure towards the same TRP

o note: with Alt 1, PDCCH order sent by one TRP triggering RACH procedure towards another TRP is not allowed

• Alt 2: PDCCH order sent by one TRP triggers RACH procedure towards either the same TRP or a different TRP

o This does not preclude PDCCH order triggering two RACH procedures for two TRPs

(continued)

| |
|---|
| **Agreement** |
| For multi-DCI based Multi-TRP operation with two TA enhancement, support enhancements related to indicating TAG ID via absolute TA command: |
| • FFS: whether the indication is implicit or explicit |
| • Detailed indication schemes are FFS |
| • This does not preclude indication of two TAG IDs (if supported) |
| • Note: This applies at least to MSGB in case of C-RNTI |
| **Conclusion** |
| For multi-DCI based Multi-TRP operation with two TA enhancement, it cannot always be assumed that both TRPs have knowledge of the overlapping region between transmissions corresponding to the two TAs. |
| • Note: This doesn't prevent the network from applying scheduling restrictions even if the TRPs have no knowledge of the overlapping region |
| **Agreement** |
| For intra-cell multi-DCI based Multi-TRP operation with two TA enhancement, support at least one of the following alternatives (down selection to be done in RAN1#111): |
| • Alt 1: indicate TAG ID as part of TA command in RAR |
| • Alt 2: indicate TAG ID as part of PDCCH order |
| • Alt 3: divide SSBs into two groups, one for each TRP. If a SSB associated to a RACH procedure belongs to the nth group (n=1,2), then the TA obtained via the RACH procedure corresponds to the nth TRP. |
| • Alt 4: divide RACH resources into two groups, where for a RACH procedure, if the corresponding RACH resource belongs to the nth group (n=1,2), then the TA obtained via the RACH procedure corresponds to the nth TRP. |
| • Alt 5: divide preambles into two groups, where for a RACH procedure, if the corresponding preamble belongs to the nth group (n=1,2), then the TA obtained via the RACH procedure corresponds to the nth TRP |
| • Alt 6: TAG ID is associated with CORESETPoolIndex and TAG ID is determined based on the CORESETPoolIndex of PDCCH order |
| Alt 7: Each TCI state is associated with a TAG ID, and the TAG ID corresponding to RACH triggered by a PDCCH order is determined based on the TCI state used to receive the PDCCH order |

| |
|---|
| Note: If Alt 1 or Alt 2 is downselected, then it does not preclude indication of two TAG IDs (if supported) |
| **Agreement** |
| For multi-DCI based Multi-TRP operation with two TA enhancement, support CFRA triggered by PDCCH order for both intra-cell and inter-cell cases. |
| **Agreement** |
| For multi-DCI based Multi-TRP operation with two TA enhancement, support the case where a PDCCH order sent by one TRP triggers RACH procedure towards either the same TRP or a different TRP at least for inter-cell Multi-DCI. |
| **Agreement** |
| For associating TAGs to target UL channels/signals for multi-DCI based multi-TRP operation, support the following: Associate TAG to TCI-state |
| • Associate TAG ID with UL/joint TCI state |
| • For UL transmission, the TAG ID associated with the UL/joint TCI state is utilized |
| • A baseline is UE expects that the [activated] UL/joint TCI states [of UL signals/channels] associated to one CORESET Pool Index correspond to one TAG |
| • Working Assumption: A UE may report that it supports that the [activated] UL/joint TCI states [of UL signals/channels] associated to one CORESETPoolIndex correspond to both TAGs FFS: on how to handle association when Rel-15/16 spatial relation framework is used for |
| • PUCCH |
| • DG/CG Type 1/Type 2 PUSCH |
| • AP/SP/P SRS |
| **Agreement** |
| Confirm the following working assumption: |

(continued)

For multi-DCI based inter-cell Multi-TRP operation with two TA enhancement, one additional PRACH configuration is supported for each configured additional PCI
• the additional PRACH configuration is used in a RACH procedure triggered by a PDCCH order for the corresponding configured additional PCI

**Agreement**

For multi-DCI based Multi-TRP operation with two TA enhancement, for the case when the UE does not support UL STxMP transmission, down-select at least one of the following in RAN1#112bis-e:

• Alt 1: Introducing a time gap *X* between two UL transmissions associated with two different TA values

∘ E.g., X symbols in the slot(s) corresponding to the two UL transmission remain unused

∘ FFS: How X is determined

• Alt 2: Reduce the overlapping duration of one of the two UL transmissions

• Alt 3: Scheduling restriction is applied such that the UE does not expect the two UL transmissions to overlap

• Other alternatives are not precluded

Operations/methods/terms according to an embodiment of the present disclosure described below may be based on Table 10. For example, the operations/methods/terms according to an embodiment of the present disclosure described below may be interpreted/changed/applied based on Table 10.

For example, the plurality of TA values may mean a plurality of timing advance groups (TAGs) or a plurality of TAG IDs. One TA value may mean one TAG (TAG ID).

For example, the plurality of TA values may mean TA values corresponding to a plurality of TAGs (a plurality of TAG IDs). One TA value may mean a TA value (in $T_{TA}$ Table 1) for one TAG (TAG ID).

In the TCI state configuration (TCI state pool) for unified TCI, the two TRP-specific TA values (e.g., two TAGs or TAs corresponding to two TAGs) may be connected/corresponding to a specific TCI state(s) (group). When two TA values are connected/corresponded to the two TCI states corresponding to M/N > 1, the UE may perform UL transmission using a TRP-specific TA value connected to each TCI state in the UL transmission using each TCI state. For example, timing of UL transmission based on a first TCI state may be determined based on TA related to the first TCI state (e.g., a first TAG or a first TA for a first TAG), and timing of UL transmission based on a second TCI state may be determined based on TA related to the second TCI state (e.g., a second TAG or a second TA for a second TAG).

However, even if the unified TCI is supported by the UE, UL spatialRelationInfo or/and reference RS of UL TCI cannot be applied in FR 1 (Frequency Range 1). For example, a UE capability for spatialRelation of the UE may be defined as shown in Table 11 below.

[Table 11]

**spatial Relations, spatialRelations-v1640**

Indicates whether the UE supports spatial relations. The capability signalling comprises the following parameters.

- *maxNumberConfiguredSpatialRelations* indicates the maximum number of configured spatial relations per CC for PUCCH and SRS. It is not applicable to FR1 and applicable to FR2 only. The UE is mandated to report 16 or higher values. *maxNumberConfiguredSpatialRelations-v1640* indicates the maximum number of configured spatial relations per CC for PUCCH and SRS with UE supporting the configuration of maximum 64 PUCCH spatial relations per BWP per CC;

- *maxNumberActiveSpatialRelations* indicates the maximum number of active spatial relations with regarding to PUCCH and SRS for PUSCH, per BWP per CC. It is not applicable to FR1 and applicable and mandatory to report one or higher value for FR2 only;

- *additionalActiveSpatialRelationPUCCH* indicates support of one additional active spatial relation for PUCCH. It is mandatory with capability signalling if *maxNumberActiveSpatialRelations* is set to n1;

- *maxNumberDL-RS-QCL-TypeD* indicates the maximum number of downlink RS resources used for QCL type D in the active TCI states and active spatial relation information, which is optional.

The UE is mandated to report *spatialRelations* for FR2. if *maxNumberConfiguredSpatialRelations-v1640* is reported, UE shall report value *n96* in *maxNumberConfiguredSpatialRelations*.

Referring to Table 11, spatial relations for PUCCH and SRS are not supported for FR1 (e.g., UE operation in FR1).

Therefore, for FR1, there may be ambiguity in the UE operation when the base station configures/indicates the two TA values using the unified TCI framework.

The present disclosure describes i) a method for the BS to configure/indicate multiple TAs for a specific CC/BWP for uplink transmission of a UE (especially FR1) as discussed above, and ii) a method for the UE to request/acquire multiple TAs, and proposes subsequent UE operations.

In the present disclosure, '/' may be interpreted as 'and', 'or', or 'and/or' based on the context.

Proposal 1

A UE may receive a unified TCI configuration corresponding to M/N > 1 (in FR1 operation). For example, the UE may receive configuration information for two or more unified TCI states from a base station (BS). The two or more unified TCI states may include at least one of i) two or more joint TCI states, ii) two or more DL TCI states, and/or iii) two or more UL TCI states.

When the UE is configured, by the base station, with two CORESET pool indexes within a CC/BWP for M-DCI based M-TRP operation, an UL related TCI state (e.g., DL/UL joint TCI state and/or DL/UL separate TCI state) connected/corresponding to each of the two CORESET pool indexes may be configured/indicated. For example, the UE may receive configuration information for a plurality of CORESETs from the base station. CORESETs based on the two CORESET pool indexes may be configured based on the configuration information. The UE may receive, from the base station, information representing two UL related TCI states (e.g., two joint TCI states or two UL TCI states) connected/-corresponding/related to the two CORESET pool indexes. The information representing the two UL related TCI states may be received based on at least one of DCI, MAC CE or RRC message.

Two TRP-specific TA values may be connected/corresponded to the two UL related TCI states. In addition, a power control parameter set configured to each of the two UL related TCI states may be used as a power control parameter set for each target TRP in M-TRP UL transmission (e.g., M-TRP PUSCH/PUCCH repetition) (for S-DCI based M-TRP operation).

Specifically, since UL spatialRelationInfo (UL TCI) information is not applicable in FR1, TCI states for configuring/indicating two TAs/PC parameter sets may be configured/utilized as follows.

Reference RS corresponding to QCL type-D or/and UL spatialRelationInfo (UL TCI) may not be configured to the two TCI states. For example, in each TCI state, a referenceSignal field (within QCL-Info) may not exist. For example, the UE may not expect that the referenceSignal field (within QCL-Info) is configured in each TCI state.

If the reference RS corresponding to QCL type-D or/and UL spatialRelationInfo (UL TCI) is configured to the two TCI states, the UE may skip/ignore/override the reference RS and perform UL transmission using only TA/PC information corresponding to each target TRP (e.g., first/second TCI or CORESET pool index 0/1).

As described above, the UE may determine TA/PC information corresponding to each target TRP (e.g., each TRP among two target TRPs) based on the two TCI states. The UE may perform UL transmission for each target TRP based on the TA information/PC information. An UL transmission timing (e.g., uplink frame) for each target TRP may be determined based on the TA information (e.g., TAG or TA value for TAG). An UL transmission power for each target TRP may be determined based on the PC information (e.g., one or more PC parameters).

The TCI state may be configured/indicated via RRC, MAC CE or/and DCI in the same manner as the existing Rel-17 operation. If the TCI state is indicated via the DCI, the base station may use i) DL(/UL) grant DCI or ii) DL(/UL) grant DCI without data scheduling. The base station may dynamically indicate the TCI state for each target TRP through a TCI field of the DCI. For example, if the TCI indication via the DCI as above is performed in a CORESET with a specific CORESET pool index, the UE may use the corresponding TCI for reception/transmission of DL/UL channel/RS connected/corresponding to the CORESET pool index.

In this instance, according to the Rel-17 standard, in the TCI indication via grant DCI without data scheduling, the UE may transmit Ack (/Nack) after receiving the DCI (via PUCCH and/or PUSCH) (e.g., Use ACK/NACK mechanism analogous to that for SPS PDSCH release with both type-1 and type-2 HARQ-ACK codebook).

If the above operation (i.e., TCI indication via grant DCI without data scheduling) is performed in FR1, the UE may skip Ack (/Nack) transmission. The skip of the Ack (/Nack) transmission takes into account the following technical matters.

In Rel-17, the base station checks whether the UE has received well a TCI state including beam information (e.g., reference RS) for reception/transmission of the UE indicated via the DCI. Thereafter, the base station may use the Tx/Rx beam of the base station corresponding to the indicated TCI information in subsequent DL/UL transmission/reception. On the other hand, an indication for the TCI state not including Tx/Rx beam information of the UE allows the base station to configure/indicate two TAs (e.g., two TAGs or two TAs corresponding to two TAGs) and two PCs (e.g., two parameter sets). Whether the indication for the TAs/PCs has been successfully transmitted may be determined through subsequent transmission of the UE. Specifically, after the base station receives subsequent UL transmission of the UE, the base station may determine whether the TA/PC indication by the preceding DCI has been successfully transmitted to the UE and the UE has performed the UL transmission based on the indication.

Accordingly, the UE may skip the Ack (/Nack) transmission for the indication for the TCI state in FR1 (the indication for the TCI state not including the Tx/Rx beam information of the UE).

In addition, as the Rx/Tx beam indication is dynamically performed in the existing Rel-17 unified TCI framework, a concept such as beam application time (BAT) has been defined to determine at which time the UE should perform change of the corresponding Rx/Tx beam from the time of DCI reception. For example, beamAppTime parameter may be set based on PDSCH-config. The beamAppTime parameter indicates a first slot to which the unified TCI indicated by the DCI is applied. The beamAppTime parameter may indicate the number of symbols (Y) (e.g., n1, n2, n4, n7, n14, n28, n42, n56, n70, n84, n98, n112, n224, n336). The first slot may be a slot which is at least Y symbols after a last symbol of acknowledgement (Ack) of a joint or separate DL/UL beam indication.

As described above, when the unified TCI framework is used to configure/indicate the TA/PC, the BAT may be applied as a setting value for at which time the UL TA/PC should be applied. Or/and, since the TCI state is irrelevant to the beam application, the UE may not expect the BAT to be configured or may expect the BAT value to be set to 0. As a specific example, it may be assumed that unified TCI states for FR1 are indicated by a DCI (e.g., DL grant DCI, UL grant DCI, DCI without DL grant or DCI without UL grant). Since the indicated unified TCI states are irrelevant to the beam application, transmission of HARQ-ACK information for the DCI may be skipped. Since the transmission of the HARQ-ACK information is skipped, a time (e.g., symbol, slot, subframe or frame) for application of the indicated unified TCI states cannot be determined by the beamAppTime parameter. In this case, even if the beamAppTime parameter is configured, the UE may not use the beamAppTime parameter. In other words, the UE may ignore the beamAppTime parameter. For example, the time (e.g., symbol, slot, subframe or frame) for application of the indicated unified TCI states may be determined without applying the beamAppTime parameter. For example, the time for application of the indicated unified TCI states may be determined regardless of the beamAppTime parameter.

Proposal 2

For two TRP-specific TA values or/and two TRP-specific PC parameter sets, a base station may configure separate parameter(s) Specifically, (in FR1 operation) the two TRP-specific TA values or/and the two TRP-specific PC parameter sets may be configured/connected/corresponded to the separately configured parameter(s).

The separate parameter(s) may include a TRP-specific TA value. In this instance, the parameter(s) may be configured as in the following i) or ii).

    i) A single parameter including both a first TA value and a second TA value may be configured.
    ii) Two parameters may be configured. A first parameter may include the first TA value, and a second parameter may include the second TA value.

The separate parameter(s) may include a TRP-specific PC parameter set. In this instance, the parameter(s) may be configured as in the following i) or ii).

    i) A single parameter including both a first PC parameter set and a second PC parameter set may be configured.
    ii) Two parameters may be configured. A first parameter may include the first PC parameter set, and a second parameter may include the second PC parameter set.

In the i), a specific CORESET pool index may be connected/corresponded to the specific TA value or/and the specific PC parameter set within the single parameter. For example, CORESET pool index 0 may be connected to the first TA value/first PC parameter set, and CORESET pool index 1 may be connected to the second TA value/second PC parameter set.

In the ii), a specific CORESET pool index may be connected/corresponded to a specific parameter among the two parameters. For example, CORESET pool index 0 may be connected to the first parameter, and CORESET pool index 1 may be connected to the second parameter.

As described above, the first TA value/first PC parameter set and the second TA value/second PC parameter set may be configured to the specific parameter(s) and may be connected to the specific CORESET pool index. A UE may perform UL transmission by utilizing the TRP-specific TA value or/and the TRP-specific PC parameter set connected to the corresponding CORESET pool index upon the UL transmission related/corresponding to the specific CORESET pool index.

For more flexible configuration, the TRP-specific TA values corresponding to the above two TA values or/and the two TRP-specific PC parameter sets may be configured/connected/mapped/updated in each CORESET (group) configuration. Hence, the UE can perform UL transmission by utilizing the TRP-specific TA value or/and the TRP-specific PC parameter set configured to the corresponding CORESET upon the UL transmission related to a specific CORESET (group).

In the above embodiment, the expression "(a specific parameter and another parameter) may be connected/-corresponded" may mean that a specific parameter and another parameter can be associated via RRC/MAC CE/DCI signaling.

Unless embodiments of the proposal 1 and the proposal 2 are mutually exclusive, embodiments of the proposal 1 and embodiments of the proposal 2 can be combined and applied to UE/BS operation. For example, an operation of configuring unified TCI (proposal 1) and an operation of configuring separate parameter(s) (proposal 2) cannot be combined, but other embodiments can be combined and applied. Specifically, embodiments of the proposal 1 and embodiments of the proposal 2 related to two TRP-specific TA values (two TRP-specific PC parameter sets) can be combined and applied to the UE/BS operation.

Multiple TA acquisition

In order for the plurality of TA values described above to be configured, it is necessary to determine how the BS will request/acquire multiple TA values. Hereinafter, a method and terminal operation for the BS/UE to obtain a plurality of TA values are proposed. Specifically, Proposal 3 below proposes a method for the UE to perform two TA acquisitions and a method for configuring the TA in the BS without RACH enhancement, and Proposal 4 proposes a method for the UE to perform two TA acquisitions and a method for configuring the TA in the BS through RACH enhancement.

Hereinafter, the first TA or second TA being connected/corresponding to a specific CORESET pool index may mean that the first TA or/and second TA are connected/corresponding to the first TCI state or/and the second TCI state (for A common beam operation in the unified TCI framework).

Hereinafter, the first TA and the second TA may mean first/second TA values managed for configuring two TRP-specific TA values within a specific TAG (i.e., one TAG). Alternatively, the first TA and the second TA may mean the first TA value and the second TA value that are managed corresponding to different TAGs (first TAG and second TAG) for the same CC (set).

Proposal 3

Hereinafter, a method for performing two TA acquisitions and a method for configuring the TA in the BS without RACH enhancement will be described.

Proposal 3-1

The UE may perform RACH transmission with a single (and/or primary/first) TA in a RACH transmission procedure including an initial access (e.g., PDCCH ordered RACH, RACH transmitted upon TA timer expiration, etc.). The BS may measure the first/second TA by receiving the subsequent SRS of the UE. That is, a method for configuring/indicating an implicit/explicit connection/correspondence relationship between a specific SRS resource (set) and a specific CORESET pool index is proposed.

The following operations may be performed on an aperiodic SRS resource (set) corresponding to dynamic scheduling: The UE may receive SRS triggering DCI in a CORESET having a specific CORESET pool index. At this time, the aperiodic SRS resource (set) transmitted by the UE may be connected/corresponded to the specific CORESET pool index.

The following operations may be performed with respect to periodic/semi-persistent SRS resources (set) transmitted by the UE via RRC/MAC CE signaling The BS may (explicitly) configure/connect/correspond to an associated CORESET pool index for a specific SRS resource (set). Through this, the UE/BS may know which CORESET pool index a specific SRS resource (set) is connected to/corresponds to.

As a result, the BS/UE may understand that a specific P/SP/AP SRS resource (set) transmitted by the UE is associated with/corresponding to the specific CORESET pool index. In other words, the BS may identify the CORESET pool index associated with/corresponding to the specific P/SP/AP SRS resource (set) transmitted by the UE. The BS may measure the first TA or/and the second TA through the SRS transmitted by the UE.

According to an embodiment, the first(/primary) TA may be acquired through the existing RACH procedure. The second TA may be acquired through the SRS related to CORESET pool index 1 as described above.

Proposal 3-2

The BS may measure the first TA or/and second TA connected/corresponding to the specific CORESET pool index through the proposal 3-1. The BS may configure/indicate TRP-specific TA value (i.e., first/second TA) by utilizing enhanced RAR MAC CE format or/and enhanced TA command MAC CE.

As an example, the BS may configure a target CORESET pool index in the enhanced MAC CE format. Through this, a TA value associated with/corresponding to the corresponding CORESET pool index may be configured/indicated. As a specific example, the enhanced MAC CE format may include a field indicating the target CORESET pool index.

As an example, the BS may configure a first/second TCI corresponding to M / N > 1 for a TRP-specific common beam operation in the enhanced MAC CE format as a target. Through this, the TA value associated with/corresponding to the first/second TCI may be configured/indicated. As a specific example, the enhanced MAC CE format may include a field indicating a target TCI (e.g., first TCI state or second TCI state).

As an example, the BS may configure a specific joint and/or separate UL TCI state(s) index in the enhanced MAC CE format as the target. Through this, a TA value to be applied to the corresponding TCI state(s) may be configured/indicated. Specifically, the TA value in the MAC CE format for configuring/indicating the second TA value may be configured/specified/indicated to have a different TA granularity or/and value range than the first TA value in the same MAC CE format. This is because in the M-TRP operation, a difference in UL TA values of different TRPs may differ by a CP length or more from a DL timing reference. (When using the same number of bits as the first TA value) The granularity of the second TA value may be expressed with a slightly larger step size than that of the first TA value. (When using the same number of bits as the first TA value) The value range of the second TA value may be expressed with a slightly larger value range than that of the first TA value.

As described above, the BS may configure/indicate the first/second TA for the specific target CORESET pool index/target common TCI/target TCI state(s). In the transmission of UL channel/RS (especially SRS in the proposal 3-1) associated with the target CORESET pool index/target common TCI/target TCI state(s), the BS may perform uplink transmission by applying the configured/indicated first/second TA value.

The BS may perform update/activation of the TRP-specific TA value by measuring the TRP-specific SRS transmission of the UE based on Proposal 3-1 after configuring/indicating the TRP-specific TA through Proposal 3-2.

Proposal 4

Hereinafter, a method for performing two TA acquisitions and a method for configuring the TA in the BS without RACH enhancement will be described.

Proposal 4-1

A method for supporting TRP-specific RACH transmission for TRP-specific TA measurement may be considered.

The BS may perform grouping on the SSB (SS/PBCH block) which the UE utilizes for RACH transmission. The BS may associate/correspond a specific SSB group with/to a specific CORESET pool index. For example, SSBs corresponding to SSB indices 0 to 31 may be connected/corresponded to CORESET pool index 0, and SSBs corresponding to SSB indices 32 to 64 may be connected/corresponded to CORESET pool index 1. Here, the SSB index may be an SS/PBCH index of an SS/PBCH block.

Based on the grouping, the BS may configure/indicate to utilize a specific SSB index when configuring/indicating to transmit (PDCCH ordered) RACH to the UE. The RACH may mean a random access preamble. For example, the BS may transmit DCI (e.g., DCI format 1_0) containing information related to a PDCCH order to the UE. A random access procedure is initiated by the PDCCH order. The UE transmits the random access preamble to the BS. The information related to the PDCCH order may include an SS/PBCH index. The SS/PBCH index may be connected to/associated with a specific CORESET pool index The random access preamble may be transmitted based on the SS/PBCH index.

By causing the UE to transmit a RACH corresponding to the SSB (based on the specific SSB index), the BS may measure a TRP-specific TA associated with/corresponding to each CORESET pool index by utilizing the RACH.

According to an embodiment, multiple RACH transmissions may be indicated/scheduled to the UE via a single PDCCH (e.g., single DCI) transmission so that the UE may transmit an RACH associated with each CORESET pool index when the BS indicates (PDCCH ordered) RACH transmission. As a specific example, the single DCI may include information related to PDCCH order. At this time, the information related to the PDCCH order may include two SS/PBCH indices. The UE may transmit two random access preambles to the BS based on the two SS/PBCH indices. Through such a mode, overhead/delay may be reduced with a single PDCCH transmission, and the UE may be instructed to transmit all RACHs destined for each TRP. The BS may perform TA measurements for each TRP at once.

According to an embodiment, a connection/correspondence relationship between the specific SSB group and the specific CORESET pool index may be configured/defined/specified by connecting/corresponding the specific CORESET pool index and the PRACH preamble index/RACH occasion/PRACH mask index. Specifically, DCI (e.g., DCI Format 1_0) related to the PDCCH order may include a Random Access Preamble index, an SS/PBCH index, and a PRACH Mask index. When a value of the Random Access Preamble index is not zero, the PRACH Mask index indicates an RACH occasion associated with the SS/PBCH indicated by the SS/PBCH index. The specific CORESET pool index may be configured to be connected/corresponding to at least one of the PRACH preamble index, the PRACH mask index, or the RACH occasion.

Additionally, if a connection/correspondence relationship between a specific SSB group and a specific CORESET pool index is defined/configured, the following operation may be performed. The BS may schedule the RACH transmission of the UE according to the PDCCH order through a CORESET having a specific CORSET pool index. At this time, the UE may perform RACH transmission corresponding to the SSB connected/corresponding to the specific CORESET pool index (or such RACH transmission may be forced) (even if there is no SSB index indication in the corresponding PDCCH). In other words, the UE may perform the RACH transmission based on the CORESET pool index of the CORESET in which the DCI (related to the PDCCH order) is received.

The RACH transmission in Proposal 4-1 above may not be utilized in RACH transmission upon an initial access.

Even if the UE performs TRP-specific RACH transmission as described above, the TA value is not changed during UL transmission in the RA procedure because the UE performs all operations based on a specific SSB in the RA procedure. That is, the UE performs the UL transmission by utilizing the same TA value. The RA procedure may include a 4-step RACH procedure and/or a 2-step RACH procedure. For example, the 4-step RACH procedure (e.g., contention-based RACH) may include operations of transmitting Msg 1 (preamble), receiving Msg 2 (RAR), transmitting Msg 3 (PUSCH), and receiving Msg 4 (contention-resolution). For example, the 2-step RACH procedure may include operations of transmitting Msg A (preamble and PUSCH) and receiving Msg B (RAR).

Proposal 4-2

Hereinafter, a method for managing a TRP-specific TA timer will be described.

According to the existing TA maintenance operation, when a timer corresponding to a Primary Timing Advance Group (PTAG) expires due to timeAlignmentTimer (per TAG), the UE may release the UL transmission and transmit the RACH. The embodiment proposes a method for managing timeAlignmentTimer corresponding to the TA timer to be TRP-specific.

The UE may manage up to two TA timers corresponding to CORESET pool indices 0 and 1 or/and first and second TA values within a single TAG. Here, two respective timers may be timers configured to different TAGs for different TRPs.

According to the existing operation, when the TA timer expires, the UE transmits a RACH corresponding to a random SSB (e.g., an SSB based on one of the SSB indices). On the other hand, according to the embodiment, when a TA timer associated with/corresponding to a specific CORESET pool index or/and a specific first/second TA value expires, the UE may transmit the RACH based on the CORESET pool index associated with/corresponding to the expired TA timer. That is, an RACH corresponding to an SSB that is connected/corresponding to the corresponding CORESET pool index may be transmitted.

Through such an operation, the UE may transmit a RACH for a specific TRP when the TA value corresponding to the TRP has expired. The BS may measure the TA value of the UE from the corresponding TRP and configure/indicate/update the TRP-specific TA value to the UE (as in Proposal 3-2).

In addition, it may be assumed that in the existing operation, when the timer corresponding to the PTAG expires, a UL out of synch (OOS) operation is performed, but in the case where two TRP-specific timers corresponding to the first and second TAs, respectively are managed as in Proposal 4-2 above, one timer expires and the other timer does not expire. In such cases, the UE may not need to perform all of the predefined UL OOS operations (e.g., not perform the RRC release operation, etc.). If both timers expire, all predefined UL OOS operations may need to be performed.

Proposal 4-3

Hereinafter, a method for transmitting, by the BS, an RAR corresponding to TRP-specific RACH transmission will be described.

According to Proposals 4-1 or/and 4-2 above, a specific RACH transmission of the UE corresponds to a specific SSB. Depending on a correspondence relationship between the SSB index and the CORESET pool index, a specific RACH transmission and a specific CORESET pool index may naturally have a correspondence relationship. A method for transmitting, by the BS, the RAR to be TRP-specific with respect to the TRP-specific RACH transmission of the UE is proposed.

The BS may receive a specific RACH that has a correspondence relationship with a specific CORESET pool index. The BS may transmit the RAR for the corresponding RACH to the UE based on some of the CORESETs among the CORESETs having the specific CORESET pool index. As an example, the some CORESETs may be a CORESET having a lowest index among the CORESETs that are configured with the corresponding CORESET pool index.

In the existing standard operation, the UE may receive, from the BS, a configuration for a typel-PDCCH common search space (CSS) set for receiving the RAR. Specifically, the typel-PDCCH CSS set may be configured based on the ra-searchspace of the PDCCH-ConfigCommon IE. For example, the RAR may be received based on monitoring PDCCH candidates in a search space set (SS set).

Proposal 4-3 proposes a method to enable the UE to receive A TRP-specific RAR through a separate UE-specific Search Space (USS) set in addition to the typel-PDCCH CSS set.

According to an embodiment, a method for connecting/configuring a CORESET for receiving the separate USS set and the TRP-specific RAR may be considered. Each USS set may be connected/corresponding to a CORESET with a different CORESET pool index.

According to an embodiment, the BS may transmit an RAR for an RACH for first/primary (and/or corresponding to CORESET pool index 0) TA value measurement through the existing type1-PDCCH CSS set. According to an embodiment, the BS may transmit an RAR for an RACH for first/primary (and/or corresponding to CORESET pool index 1) TA value measurement through the existing type1-PDCCH CSS set. When the USS set is used for TRP-specific RAR reception as described above, a separate RNTI for the TRP-specific RAR reception may be configured in the UE.

According to an embodiment, the UE may receive a TRP-specific RAR based on a configuration of a plurality of CSS sets (e.g., a configuration of two CSS sets considering two TRPs). Each USS set may be connected/corresponding to a CORESET with a different CORESET pool index.

A MAC CE format transmitted via such TRP-specific RAR may include all configurations/indications for a plurality of TA values within a specific CC/BWP, as in Proposal 3-2 above. Alternatively, the MAC CE format transmitted via the TRP-specific RAR may only include a configuration/indication for a TA values associated with/corresponding to the CORESET pool index through which the RAR is transmitted.

For a TA value associated/corresponding to a specific CORESET pool index indicated through the MAC CE format, the UE may specify/define a DL timing reference based on the reception of the RAR (UL grant DCI) transmitted in the CORESET having the corresponding CORESET pool index. The UE may apply the TA value indicated from the corresponding DL timing reference. In an M-DCI based M-TRP situation of non-ideal backhaul scenario (e.g., scenario where there is no coordination between TRPs), the DL timing reference between TRPs may be significantly different. In such a case, the BS may indicate, to the UE, an appropriate TRP-specific TA value for each DL timing reference for each TRP through the above-described operation.

Embodiments of Proposals 3 and 4 may be applied to BS/UE operations in combination with the embodiments of Proposal 1 and the embodiments of Proposal 2, as long as the embodiments are not mutually exclusive. For example, the operation of performing two TA acquisitions without RACH enhancement (Proposal 3) and the operation of performing two TA acquisitions with RACH enhancement (Proposal 4) may not be combined, but other embodiments may be combined and applied. Specifically, the embodiments of Proposal 3 and the embodiments of Proposal 4 associated with two TRP-specific TA values may be combined and applied to the UE/BS operations.

A signaling procedure based on the above-described embodiments is described in detail below.

An example of a UE (or BS) operation based on at least one of the above-described embodiments (e.g., at least one of the proposals 1 and 2) is as follows.

1) The UE receives (transmits) unified TCI related configuration information or/and TRP-specific TA/PC related configuration information.

The configuration information may be based on the contents of the proposals 1 to 4.

The UE transmits (receives) the SRS or/and RACH based on Proposal 3 or Proposal 4 according to the BS configuration.

The BS may receive the SRS or/and RACH and measure the TRP-specific TA, and then configure /indicate the TRP-specific TA value to the UE through (RAR or/and TA command) MAC CE based on Proposal 3 or Proposal 4.

2) The UE receives (transmits) a message scheduling TRP-specific UL transmission.

The message may be based on at least one of a first PDCCH (first DCI) and/or a second PDCCH (first DCI).

The message may be related to a specific CORESET pool index or/and a specific CORESET (group).

3) The UE transmits (receives) UL channel/RS using the TRP-specific TA/PC related configuration information based on the message.

The UL channel/RS may be based on at least one of SRS, PUSCH, PUCCH or random access preamble, and transmission of the UL channel/RS may be performed based on the contents of the proposals 1 to 4.

4) The UE may manage the TRP-specific TA timer based on the contents of Proposal 4.

The UE/BS operation is merely an example, and each operation (and step) is not necessarily essential. For example, operation related to uplink transmission using TRP-specific TA/PC of the UE according to the above-described embodiments may be omitted or added based on a UE/BS implementation method.

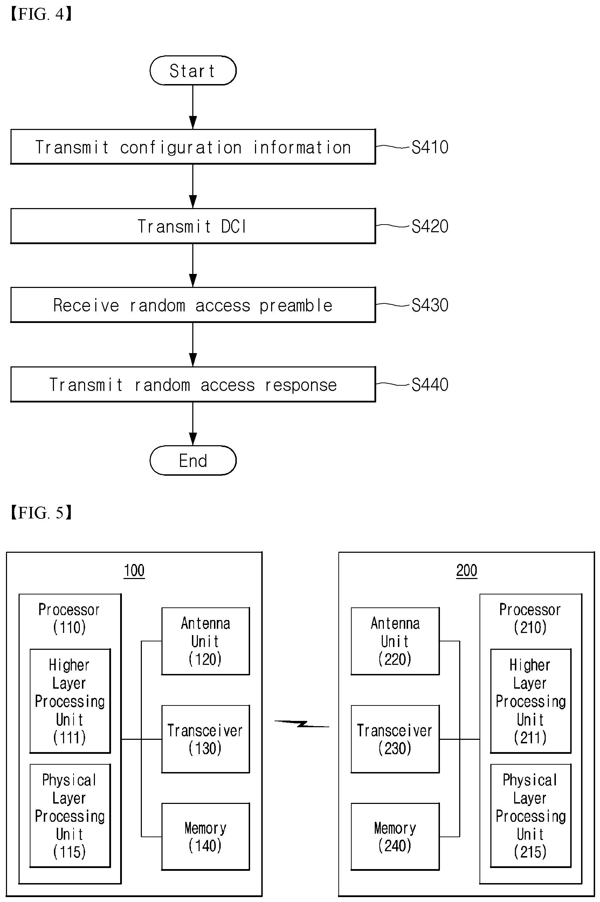

From an implementation perspective, operations of the UE/BS according to the above-described embodiments (e.g., operations related to uplink transmission using TRP-specific TA/PC of the UE based on at least one of the proposals 1 to 4) can be processed by a device (e.g., processors 110 and 210 of FIG. 5) of FIG. 5 to be described below.

Further, the operations of the UE/BS according to the above-described embodiments (e.g., operations related to uplink transmission using TRP-specific TA/PC of the UE based on at least one of the proposals 1 to 4) can be stored in a memory (e.g., memories 140 and 240 of FIG. 5) in the form of commands/programs (e.g., instructions, executable codes) for running at least one processor (e.g., processors 110 and 210 of FIG. 5).

Below, the above-described embodiments are described in detail from a UE/BS operation perspective with reference to FIGS. 3 and 4. Methods described below are merely distinguished for convenience of explanation. Thus, it is obvious that partial configuration of any method can be substituted or combined with partial configuration of another method.

FIG. 3 is a flowchart illustrating a method performed by a UE in a wireless communication system according to an embodiment of the present disclosure.

Referring to FIG. 3, a method performed by a UE in a wireless communication system according to an embodiment of the present disclosure includes a configuration information receiving step (S310), a DCI receiving step (S320), a random access preamble transmitting step (S330), and a random access response receiving step (S340).

In S310, the UE receives configuration information related to a plurality of control resource sets (CORESETs) from a BS.

Based on the configuration information, CORESETs (e.g., first CORESETs and second CORESETs) based on a first CORESET pool index and a second CORESET pool index may be configured. In other words, based on the configuration information, CORESETs based on two different control resource set (CORESET) pool indexes may be configured.

In S320, the UE receives downlink control information (DCI) from the BS. The DCI may include information related to a Physical Downlink Control Channel (PDCCH) order.

For example, the DCI may be DCI format 1_0. The information (field) related to the PDCCH order may include at least one of i) a random access preamble index and ii) an SS/PBCH index. The SS/PBCH index field may indicate an SS/PBCH (or SSB index) used to determine a RACH occasion for PRACH transmission (i.e., random access preamble transmission).

According to an embodiment, the information related to the PDCCH order may include a synchronization signal/physical broadcast channel block index (SSB index). Here, the SSB index may be an SS/PBCH index of an SS/PBCH block. As an example, the information related to the PDCCH order may include one or more SSB indices.

A random access procedure may be initiated by the PDCCH order. As an example, the random access procedure may be initiated by the PDCCH order to establish a timing advance for a Timing Advance Group. That is, DCI related to the PDCCH order may be transmitted from the BS to the UE.

As an example, the random access procedure may be a Type-1 random access procedure (4-step RA) or a Type-2 random access procedure (2-step RA).

The Type-1 random access procedure may include transmission of a random access preamble (Msg1) on a Physical Random Access Channel (PRACH), reception of a Random Access Response (RAR) (Msg2), transmission of a PUSCH scheduled by an UL grant of the RAR (Msg3), and transmission of a PDSCH for contention resolution (Msg4). When the random access procedure is contention-free random access (CFRA), the Msg3 transmission and Msg4 reception operations are omitted.

The Type-2 random access procedure may include transmission of a random access preamble and PUSCH (MsgA) and reception of a RAR (MsgB).

In S330, the UE transmits a random access preamble to the BS. The random access preamble may be based on Msg1 of the Type-1 random access procedure or MsgA of the Type-2 random access procedure.

According to an embodiment, the random access preamble may be transmitted based on the SSB index(s). The embodiment may be based on Proposal 4. The SSB index may mean an SSB index(s) indicated by DCI (e.g., DCI format 1_0) containing information related to the PDCCH order.

Specifically, a RACH occasion for transmission of the random access preamble may be determined based on the SSB index. The RACH occasion (or PRACH occasion) may mean a region of a time-frequency domain for transmission of the random access preamble. SSBs and RACH occasions (ROs) based on SSB indices have a mapping relationship. As an example, an upper layer parameter ssb-perRACH-OccasionAndCB-PreamblesPerSSB may indicate i) the number of SSBs mapped to one RACH occasion (RO) and ii) a preamble index mapped to one SSB.

The SSB index may be related to the first CORESET pool index or the second CORESET pool index. The SSB index may be a first SSB index or a second SSB index.

According to an embodiment, a plurality of random access preambles related to a plurality of TRPs (CORESET pool indices) may be transmitted based on the DCI related to the PDCCH order.

As an example, the SSB index may be based on one or more SSB indices. Based on the one or more SSB indexes including i) a first SSB index associated with the first CORESET pool index and ii) a second SSB index associated with the second CORESET pool index, a first random access preamble may be transmitted based on the first SSB index, and a second random access preamble may be transmitted based on the second SSB index. Based on the transmission of the first/second random access preambles, the UE may receive the first/second random access responses from the BS.

In S340, the UE receives a random access response (RAR) from the BS. The random access response (RAR) may include a timing advance command. The RAR may be based on Msg1 of the Type-1 random access procedure or MsgA of the Type-2 random access procedure.

For example, the RAR may be received based on the PDCCH and the PDSCH. The UE detects DCI (e.g., DCI format 1_0) transmitted via the PDCCH in a window configured for the random access procedure. The above window may be configured by the unit of a slot by an upper layer parameter ra-ResponseWindow (e.g. one or more slots). The UE receives a transport block corresponding to the PDSCH searched by the DCI in the window. The RAR may be based on the transport block. The above RAR may refer to the MAC RAR of FIG. 1.

Detection (reception) of the DCI may be based on monitoring of PDCCH candidates. According to an embodiment, the RAR may be received based on the monitoring the PDCCH candidates in the search space set (SS set). The embodiment may be based on Proposal 4-3.

The SS set may be based on a common search space set (CSS set) or a UE-specific search space set (USS set). For example, the CSS set may be a Type1-PDCCH CSS set configured by the upper layer parameter ra-SearchSpace.

The SS set may be configured separately for reception of the RAR corresponding to each TRP (i.e., each CORESET pool index). As an example, the SSB set may be related to one or more CORESETs based on the first CORESET pool index or the second CORESET pool index. The SS set may be i) a USS set (or CSS set) related to one or more first CORESETs having the first CORESET pool index, or ii) a USS set (or CSS set) related to one or more second CORESETs having the second CORESET pool index.

The method may further include an SSB receiving step. Specifically, the UE receives synchronization signals/physical broadcast channel blocks (SS/PBCH blocks, SSBs) from the BS based on a plurality of SSB indices. The SSB reception step may be performed before S310 to S320.

The plurality of SSB indices may be classified into groups corresponding to a plurality of TRPs (a plurality of CORESET pool indices). The embodiment may be based on Proposal 4-1. the plurality of SSB indices may include SSB indices belonging to a first group associated with a first CORESET pool index (e.g., first SSB indices) and SSB indices belonging to a second group associated with a second CORESET pool index (e.g., second SSB indices).

According to an embodiment, the plurality of SSB indices may include i) the first SSB indices associated with the first CORESET pool index and ii) the second SSB indices associated with the second CORESET pool index.

The SSB index may be i) one of the first SSB indices or ii) one of the second SSB indices. The SSB index may mean an SSB index indicated by DCI (e.g., DCI format 1_0) containing the information related to the PDCCH order.

The grouping of the plurality of SSB indices may be performed in ascending or descending order of the index values (i.e., the values of the SSB index).

As an example, the grouping may be performed in ascending order of the SSB index. Based on the plurality of SSB indices including SSB index 0 to SSB index 63: the first SSB indices may include SSB index 0 to SSB index 31, and the second SSB indices may include SSB index 32 to SSB index 63.

As described above, when there are two CORESET pool indices corresponding to the TRP, the first group may be SSB indices 0 to 31 (or SSB indices 32 to 63), and the second group may be SSB indices 32 to 63 (or SSB indices 0 to 31).

The grouping of the plurality of SSB indices may be performed regardless of the order of the index values (i.e., the values of the SSB index).

As an example, when there are two CORESET pool indices corresponding to the TRP, the first group may include even SSB indices (or SSB indices 0, 2, 4 to 62), and the second group may include odd SSB indices (or SSB indices 1, 3, 5 to 63). Contrary to this, the first group may contain odd SSB indices, and the second group may contain even SSB indices.

According to an embodiment, the timing advance command indicates an index related to timing adjustment (see FIG. 1, Table 4, and Table 5). The index related to the timing adjustment may mean an index value $T_A$ of Tables 4 and 5. $N_{TA}$ for calculating the timing advance (TA) may be indicated based on the index related to the timing adjustment.

The TA may refer to $T_{TA}$ in Table 1. The TA may be a TRP specific TA (e.g., a first TA or a second TA). Specifically, the TA may be related to a first timing advance group (TAG) or a second timing advance group (TAG). The first TAG (or the first TAG ID) may be related to the first CORESET pool index, and the second TAG (or the second TAG ID) may be related to the second CORESET pool index.

According to an embodiment, a time alignment timer related to the TA may be a first time alignment timer related to the first TAG or a second time alignment timer related to the second TAG. The embodiment may be based on Proposal 4-2.

When the time alignment timer is not running, the UE does not perform any uplink transmission other than transmitting the random access preamble (Msg1 and MsgA).

The first TAG and/or the second TAG may be related to a primary timing advance group (PTAG). As an example, the first TAG (or the second TAG) may be the PTAG, and the second TAG (or the first TAG) may be a secondary timing advance group (STAG). As an example, the first TAG may be a first PTAG and the second TAG may be a second PTAG.

According to the existing mode, when the TA alignment timer corresponding to the PTAG expires, the UL Out Of Synch (OOS) operation is performed. However, the operation may be unnecessary if at least one of the plurality of TA alignment timers has not expired. Therefore, the UL OOS operation may be performed limitedly when all TA alignment timers corresponding to the plurality of TRPs have expired.

As an example, based on the first time alignment timer and/or the second time alignment timer being related to the primary timing advance group (PTAG), and the first time alignment timer and the second time alignment timer being expired: the configuration for uplink transmission may be released. Thereafter, a random access preamble (e.g., a first random access preamble and/or a second random access preamble) may be transmitted based on the first SSB index and/or the second SSB index associated with the first time alignment timer and/or the second time alignment timer.

The configuration for the uplink transmission may include at least one of a configuration of a physical uplink control channel (PUCCH), a configuration of a sounding reference signal (SRS), a physical uplink shared channel (PUSCH) resource(s), and/or a configured uplink grant(s).

As an example, based on expiration of a time alignment timer related to the TA (e.g., the first time alignment timer or the second time alignment timer): the random access preamble may be transmitted based on the SSB index (e.g., the first SSB index or the second SSB index) related to the expired time alignment timer (e.g., the first time alignment timer or the second time alignment timer). Specifically, the SSB index related to the expired time alignment timer may be related to the first CORESET pool index or the second CORESET pool index. At this time, the random access preamble may be transmitted based on a random access procedure initiated by the UE (e.g., UE initiated RACH procedure) rather than the PDCCH order.

The operations based on S310 to S340 and the SSB receiving step described above may be implemented by the device of FIG. 5. For example, the UE 200 may control one or more transceivers 230 and/or one or more memories 240 to perform the operations based on steps S310 to S340 and the SSB receiving step.

Hereinafter, the embodiments described below will be specifically described in terms of the operation of the BS.

S410 to S440 and an SSB transmitting step described below correspond to the S310 to S340 and the SSB receiving step described in FIG. 3. By considering the correspondence relationship, redundant explanations are omitted. That is, a specific description of the BS operation described below may be replaced with the description/example of FIG. 3 corresponding to the operation. As an example, the description/example S310 to S340 of FIG. 3 may be additionally applied to the BS operations of S410 to S440 described below. As an example, the description/example of the SSB receiving step of FIG. 3 corresponding to the SSB transmitting step described below may be additionally applied to the SSB transmitting step described below.

FIG. 4 is a flowchart for describing a method performed by the BS in the wireless communication system according to another embodiment of the present disclosure.

Referring to FIG. 4, the method performed by the BS in the wireless communication system according to another embodiment of the present disclosure includes a configuration information transmitting step (S410), a DCI transmitting step (S420), a random access preamble receiving step (S430), and a random access response transmitting step (S440).

In S410, the BS transmits configuration information related to a plurality of control resource sets (CORESETs) to the UE.

In S420, the BS transmits downlink control information (DCI) to the UE.

In S430, the BS receives a random access preamble from the UE.

In S440, the BS transmits a random access response (RAR) to the UE.

The method may further include the SSB transmitting step. Specifically, the BS transmits synchronization signals/physical broadcast channel blocks (SS/PBCH blocks, SSBs) to the UE based on a plurality of SSB indices. The SSB transmitting step may be performed before S410 to S420.

The operations based on S410 to S440 and the SSB transmitting step described above may be implemented by the device of FIG. 5. For example, the BS 100 may control one or more transceivers 130 and/or one or more memories 140 to perform the operations based on steps S410 to S440 and the SSB transmitting step.

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

**1.** A method performed by a user equipment (UE) in a wireless communication system, the method comprising:

receiving configuration information related to a plurality of control resource sets (CORESETs) from a base station, wherein CORESETs based on a first control resource set (CORESET) pool index and a second control resource set (CORESET) pool index are configured based on the configuration information,
receiving downlink control information (DCI) from the base station, wherein the DCI includes information related to a physical downlink control channel (PDCCH) order, and a random access procedure is initiated by the PDCCH order,
transmitting a random access preamble to the base station; and
receiving a random access response (RAR) from the base station,
wherein the information related to the PDCCH order includes a synchronization signal/physical broadcast channel block index (SSB index),
wherein the random access preamble is transmitted based on the SSB index,
wherein the random access response (RAR) includes a timing advance command, and
wherein the SSB index is related to the first CORESET pool index or the second CORESET pool index.

2. The method of claim 1, further comprising:
receiving synchronization signals/physical broadcast channel blocks (SS/PBCH blocks, SSBs) from the base station based on a plurality of SSB indices.

3. The method of claim 2, wherein the plurality of SSB indices include i) first SSB indices associated with the first CORESET pool index and ii) second SSB indices associated with the second CORESET pool index.

4. The method of claim 3, wherein the SSB index is i) one of the first SSB indices or ii) one of the second SSB indices.

5. The method of claim 1, wherein the RAR is received based on monitoring PDCCH candidates in a search space set (SS set).

6. The method of claim 5, wherein the SS set is based on a common search space set (CSS set) or a UE-specific search space set (USS set).

7. The method of claim 6, wherein the SSB set is related to one or more CORESETs based on the first CORESET pool index or the second CORESET pool index.

8. The method of claim 1, wherein the timing advance command indicates an index related to timing adjustment, and $N_{TA}$ for calculating a timing advance (TA) is indicated based on the index related to the timing adjustment.

9. The method of claim 8, wherein the TA is related to a first timing advance group (TAG) or a second timing advance group (TAG),

wherein the first TAG is related to the first CORESET pool index, and
wherein the second TAG is related to the second CORESET pool index.

10. The method of claim 9, wherein a time alignment timer related to the TA is a first time alignment timer related to the first TAG or a second time alignment timer related to the second TAG.

11. The method of claim 10, wherein based on the first time alignment timer and/or the second time alignment timer being related to a primary timing advance group (PTAG), and the first time alignment timer and the second time alignment timer being expired: a configuration for uplink transmission is released.

12. The method of claim 10, wherein based on the timing alignment timer related to the TA being expired:

a random access preamble is transmitted based on an SSB index related to the expired time alignment timer, and
the SSB index related to the expired time alignment timer is related to the first CORESET pool index or the second CORESET pool index.

13. The method of claim 1, wherein the SSB index is based on one or more SSB indexes, and
wherein based on the one or more SSB indexes including i) a first SSB index associated with the first CORESET pool index and ii) a second SSB index associated with the second CORESET pool index:

a first random access preamble is transmitted based on the first SSB index, and
a second random access preamble is transmitted based on the second SSB index.

14. A user equipment (UE) operating in a wireless communication system, comprising:

one or more transceivers,
one or more processors; and
one or more memories operably connectable to the one or more processors, and storing instructions of configuring the one or more processors to perform operations based on being executed by the one or more processors,
wherein the operations include

receiving configuration information related to a plurality of control resource sets (CORESETs) from a base station, wherein CORESETs based on a first control resource set (CORESET) pool index and a second control resource set (CORESET) pool index are configured based on the configuration information,
receiving downlink control information (DCI) from the base station, wherein the DCI includes information related to a physical downlink control channel (PDCCH) order, and a random access procedure is initiated by the PDCCH order,
transmitting a random access preamble to the base station, and
receiving a random access response (RAR) from the base station,
wherein the information related to the PDCCH order includes a synchronization signal/physical broadcast channel block index (SSB index),
wherein the random access preamble is transmitted based on the SSB index,
wherein the random access response (RAR) includes a timing advance command, and
wherein the SSB index is related to the first CORESET pool index or the second CORESET pool index.

15. A device comprising: one or more memories and one or more processors functionally connected to the one or more memories,

wherein the one or more memories include instructions of configuring the one or more processors to perform operations based on being executed by the one or more processors, and
wherein the operations include

receiving configuration information related to a plurality of control resource sets (CORESETs) from a base station, wherein CORESETs based on a first control resource set (CORESET) pool index and a second control resource set (CORESET) pool index are configured based on the configuration information,
receiving downlink control information (DCI) from the base station, wherein the DCI includes information related to a physical downlink control channel (PDCCH) order, and a random access procedure is initiated by the PDCCH order,
transmitting a random access preamble to the base station, and
receiving a random access response (RAR) from the base station,
wherein the information related to the PDCCH order includes a synchronization signal/physical broadcast channel block index (SSB index),
wherein the random access preamble is transmitted based on the SSB index,
wherein the random access response (RAR) includes a timing advance command, and
wherein the SSB index is related to the first CORESET pool index or the second CORESET pool index.

16. One or more non-transitory computer-readable media storing one or more instructions, wherein one or more constructions executable by one or more processors configure the one or more processors to perform operations, and
wherein the operations include

receiving configuration information related to a plurality of control resource sets (CORESETs) from a base station, wherein CORESETs based on a first control resource set (CORESET) pool index and a second control resource set (CORESET) pool index are configured based on the configuration information,
receiving downlink control information (DCI) from the base station, wherein the DCI includes information related to a physical downlink control channel (PDCCH) order, and a random access procedure is initiated by the PDCCH order,
transmitting a random access preamble to the base station, and
receiving a random access response (RAR) from the base station,
wherein the information related to the PDCCH order includes a synchronization signal/physical broadcast channel block index (SSB index),
wherein the random access preamble is transmitted based on the SSB index,
wherein the random access response (RAR) includes a timing advance command, and
wherein the SSB index is related to the first CORESET pool index or the second CORESET pool index.

17. A method performed by a base station in a wireless communication system, the method comprising:

transmitting configuration information related to a plurality of control resource sets (CORESETs) to a user equipment (UE), wherein CORESETs based on a first control resource set (CORESET) pool index and a second control resource set (CORESET) pool index are configured based on the configuration information;
transmitting downlink control information (DCI) to the UE, wherein the DCI includes information related to a physical downlink control channel (PDCCH) order, and a random access procedure is initiated by the PDCCH order;
receiving a random access preamble from the UE; and
transmitting a random access response (RAR) to the UE,
wherein the information related to the PDCCH order includes a synchronization signal/physical broadcast channel block index (SSB index),
wherein the random access preamble is received based on the SSB index,
wherein the random access response (RAR) includes a timing advance command, and
wherein the SSB index is related to the first CORESET pool index or the second CORESET pool index.

18. A base station operating in a wireless communication system, comprising:

one or more transceivers;
one or more processors; and
one or more memories operably connectable to the one or more processors, and storing instructions of configuring the one or more processors to perform operations based on being executed by the one or more processors,
wherein the operations include

transmitting configuration information related to a plurality of control resource sets (CORESETs) to a user equipment (UE), wherein CORESETs based on a first control resource set (CORESET) pool index and a second control resource set (CORESET) pool index are configured based on the configuration information,
transmitting downlink control information (DCI) to the UE, wherein the DCI includes information related to a physical downlink control channel (PDCCH) order, and a random access procedure is initiated by the PDCCH order,
receiving a random access preamble from the UE, and
transmitting a random access response (RAR) to the UE,
wherein the information related to the PDCCH order includes a synchronization signal/physical broadcast channel block index (SSB index),
wherein the random access preamble is received based on the SSB index,
wherein the random access response (RAR) includes a timing advance command, and
wherein the SSB index is related to the first CORESET pool index or the second CORESET pool index.

【FIG. 1】

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

【FIG. 2】

| TAG ID | Timing Advance Command | Oct 1 |

【FIG. 3】

Start

Receive configuration information —S310

Receive DCI —S320

Transmit random access preamble —S330

Receive random access response —S340

End

【FIG. 4】

```
                    ┌─────────┐
                    │  Start  │
                    └────┬────┘
                         │
                         ▼
    ┌─────────────────────────────────────────┐
    │  Transmit configuration information      │──S410
    └────────────────────┬────────────────────┘
                         │
                         ▼
    ┌─────────────────────────────────────────┐
    │           Transmit DCI                   │──S420
    └────────────────────┬────────────────────┘
                         │
                         ▼
    ┌─────────────────────────────────────────┐
    │      Receive random access preamble      │──S430
    └────────────────────┬────────────────────┘
                         │
                         ▼
    ┌─────────────────────────────────────────┐
    │     Transmit random access response      │──S440
    └────────────────────┬────────────────────┘
                         │
                         ▼
                    ┌─────────┐
                    │   End   │
                    └─────────┘
```

【FIG. 5】

| INTERNATIONAL SEARCH REPORT | International application No. |
| | PCT/KR2023/005591 |

**A. CLASSIFICATION OF SUBJECT MATTER**

**H04W 56/00**(2009.01)i; **H04W 74/00**(2009.01)i; **H04W 72/23**(2023.01)i; **H04W 72/04**(2009.01)i

According to International Patent Classification (IPC) or to both national classification and IPC

**B. FIELDS SEARCHED**

Minimum documentation searched (classification system followed by classification symbols)

H04W 56/00(2009.01); H04W 24/04(2009.01); H04W 72/04(2009.01); H04W 74/00(2009.01); H04W 74/08(2009.01); H04W 76/27(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제어 자원 세트 풀 인덱스(control resource set pool index), PDCCH 순서 (physical downlink control channel order), 랜덤 액세스 프리앰블(random access preamble), 랜덤 액세스 응답(random access response), SSB 인덱스(synchronization signal/physical broadcast channel block index), 타이밍 어드밴스 커맨드(timing advance command)

**C. DOCUMENTS CONSIDERED TO BE RELEVANT**

| Category* | Citation of document, with indication, where appropriate, of the relevant passages | Relevant to claim No. |
|---|---|---|
| Y | US 2021-0378021 A1 (HUAWEI TECHNOLOGIES CO., LTD.) 02 December 2021 (2021-12-02) See paragraphs [0111]-[0312]; and figure 20. | 1-8,13-18 |
| A | | 9-12 |
| Y | WO 2021-237455 A1 (QUALCOMM INC.) 02 December 2021 (2021-12-02) See paragraphs [0004]-[0147]. | 1-8,13-18 |
| Y | US 2021-0022096 A1 (RANE, Prerana et al.) 21 January 2021 (2021-01-21) See paragraphs [0042]-[0044]; and claims 1-3. | 2-4 |
| A | WO 2022-030851 A1 (LG ELECTRONICS INC.) 10 February 2022 (2022-02-10) See paragraphs [0213]-[0298]. | 1-18 |

☑ Further documents are listed in the continuation of Box C. ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 August 2023** | **02 August 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/005591**

**C. DOCUMENTS CONSIDERED TO BE RELEVANT**

| Category* | Citation of document, with indication, where appropriate, of the relevant passages | Relevant to claim No. |
|---|---|---|
| A | 3GPP TS 38.213 V17.1.0, 3GPP; TSG RAN; NR; Physical layer procedures for control (Rel. 17). 08 April 2022. See pages 12-14 and 40-41. | 1-18 |

| | | INTERNATIONAL SEARCH REPORT<br>Information on patent family members | | International application No.<br><br>**PCT/KR2023/005591** |

| Patent document<br>cited in search report | | | Publication date<br>(day/month/year) | Patent family member(s) | | | Publication date<br>(day/month/year) |
|---|---|---|---|---|---|---|---|
| US | 2021-0378021 | A1 | 02 December 2021 | CN | 111565473 | A | 21 August 2020 |
| | | | | EP | 3911104 | A1 | 17 November 2021 |
| | | | | WO | 2020-164527 | A1 | 20 August 2020 |
| WO | 2021-237455 | A1 | 02 December 2021 | CN | 115699602 | A | 03 February 2023 |
| | | | | EP | 4158933 | A1 | 05 April 2023 |
| | | | | US | 2023-0156845 | A1 | 18 May 2023 |
| US | 2021-0022096 | A1 | 21 January 2021 | | None | | |
| WO | 2022-030851 | A1 | 10 February 2022 | CN | 116114360 | A | 12 May 2023 |
| | | | | EP | 4195797 | A1 | 14 June 2023 |
| | | | | KR | 10-2023-0035599 | A | 14 March 2023 |
| | | | | US | 2023-0189088 | A1 | 15 June 2023 |

Form PCT/ISA/210 (patent family annex) (July 2022)